# EUROPEAN PATENT APPLICATION

(11) **EP 4 746 579 A1**
(43) Date of publication of application: **20.05.2026**
(21) Application number: 24840067.3
(22) Date of filing: 09.07.2024
(51) Int. Cl.: H04W 76/28, H04W 52/02, H04W 72/50, H04W 74/0808, H04W 72/25, H04W 24/08, H04W 92/18, H04W 74/0816, H04W 74/08

(54) **METHOD AND APPARATUS FOR PERFORMING LBT CONSIDERING COT RECOVERY SIGNAL**

(30) Priority: 10.07.2023 US 202363525953 P; 10.07.2023 US 202363525955 P; 10.07.2023 US 202363525956 P; 17.07.2023 KR 20230092510; 18.07.2023 KR 20230092983; 10.08.2023 US 202363532054 P
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2024/009784
(87) International publication number: WO 2025/014257

(57) **Abstract**

Provided are a method by which a first device performs wireless communication and an apparatus supporting same. The method may comprise the steps of: receiving, from a second device, information related to a channel occupancy time (COT); rece iving, from the second device, information related to recovery of the COT of the second device; and on the basis of a first priority value related to a transmission of the first device being smaller than or equal to a second priority value included in the informati on related to recovery of the COT, performing listen before talk (LBT) of which a time duration for sensing is deterministic.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

In one embodiment, provided is a non-transitory computer-readable storage medium recording instructions. For example, the instructions, based on being executed, cause a first device to perform operations comprising: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows an example of a wireless communication system supporting an unlicensed band, based on an embodiment of the present disclosure.
FIG. 10 shows a method of occupying resources in an unlicensed band, based on an embodiment of the present disclosure.
FIG. 11 shows a case in which plurality of LBT-SBs are included in an unlicensed band, based on an embodiment of the present disclosure.
FIG. 12 shows CAP operations performed by a base station to transmit a downlink signal through an unlicensed band, based on an embodiment of the present disclosure.
FIG. 13 shows type 1 CAP operations performed by a UE to transmit an uplink signal, based on an embodiment of the present disclosure.
FIG. 14 shows a channel access procedure, based on an embodiment of the present disclosure.
FIG. 15 shows a method for obtaining a shared channel occupancy time (COT) of a UE in an unlicensed band, based on an embodiment of the present disclosure.
FIG. 16 shows a method in which a UE that has generated a COT returns the COT obtained by the UE, based on an embodiment of the present disclosure.
FIG. 17 shows an unlicensed-band operation of a COT responding UE that receives a COT withdrawal signal after receiving a shared COT from a COT initiating UE, based on an embodiment of the present disclosure.
FIG. 18 shows an unlicensed-band operation of a COT responding UE that receives a COT withdrawal signal after receiving a shared COT from a COT initiating UE, based on an embodiment of the present disclosure.
FIG. 19 shows a method for performing wireless communication by a first device, based on an embodiment of the present disclosure.
FIG. 20 shows a method for performing wireless communication by a second device, based on an embodiment of the present disclosure.
FIG. 21 shows a communication system 1, based on an embodiment of the present disclosure.
FIG. 22 shows wireless devices, based on an embodiment of the present disclosure.
FIG. 23 shows a signal process circuit for a transmission signal, based on an embodiment of the present disclosure.
FIG. 24 shows another example of a wireless device, based on an embodiment of the present disclosure.
FIG. 25 shows a hand-held device, based on an embodiment of the present disclosure.
FIG. 26 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

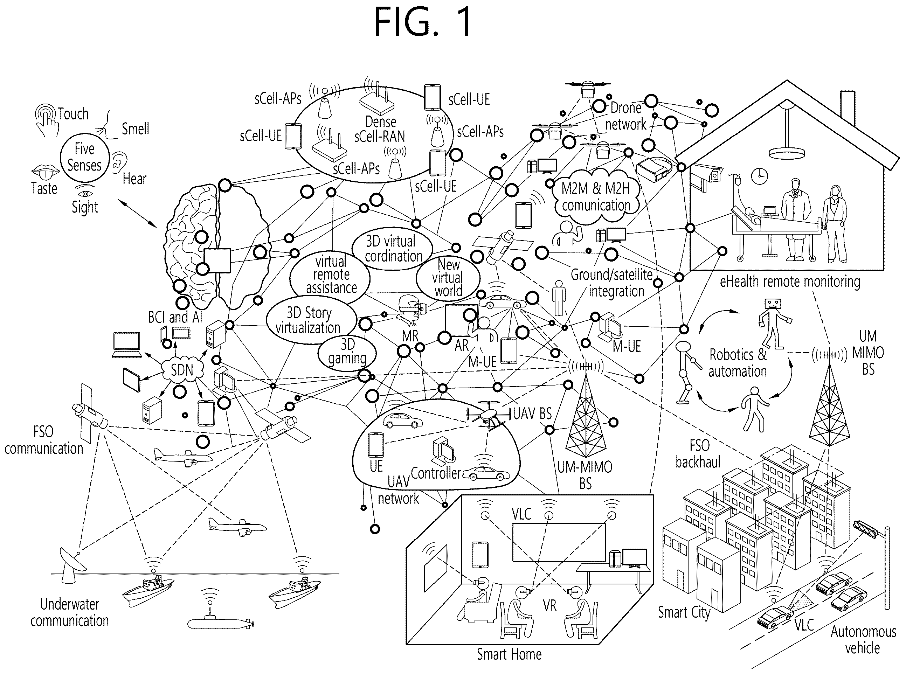

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

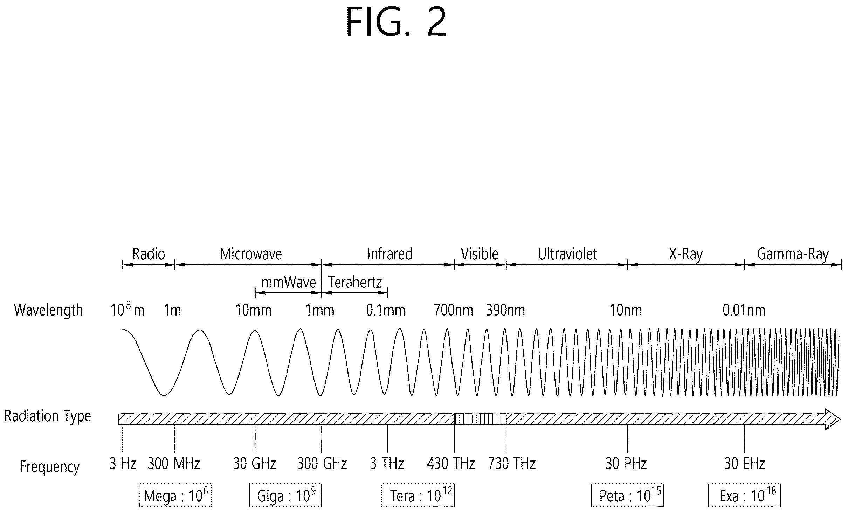

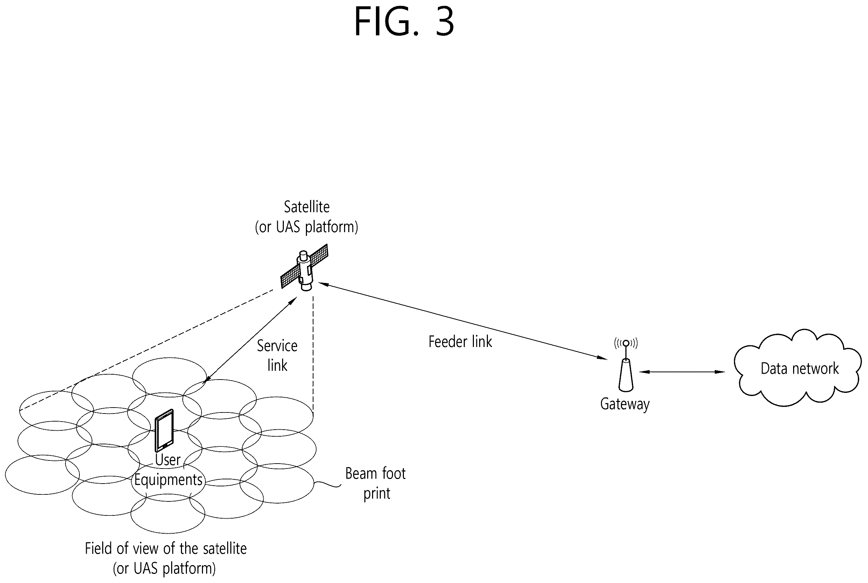

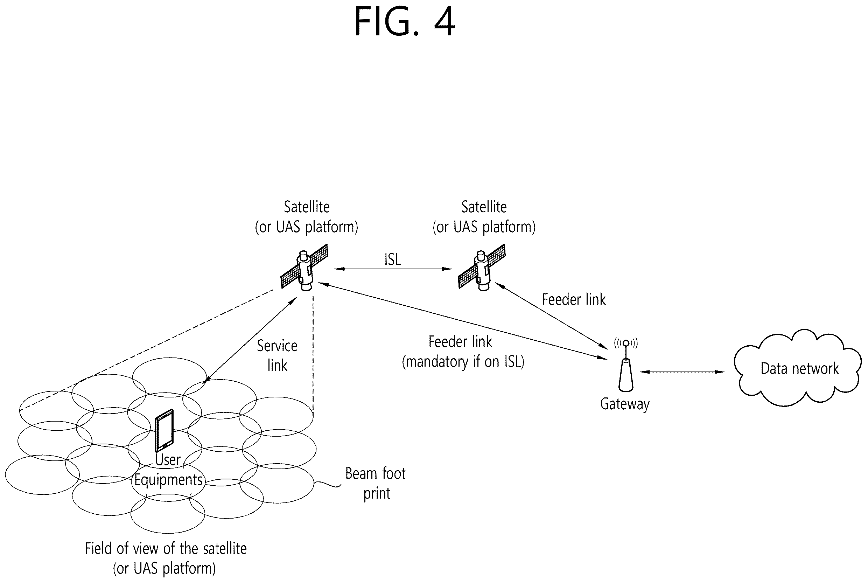

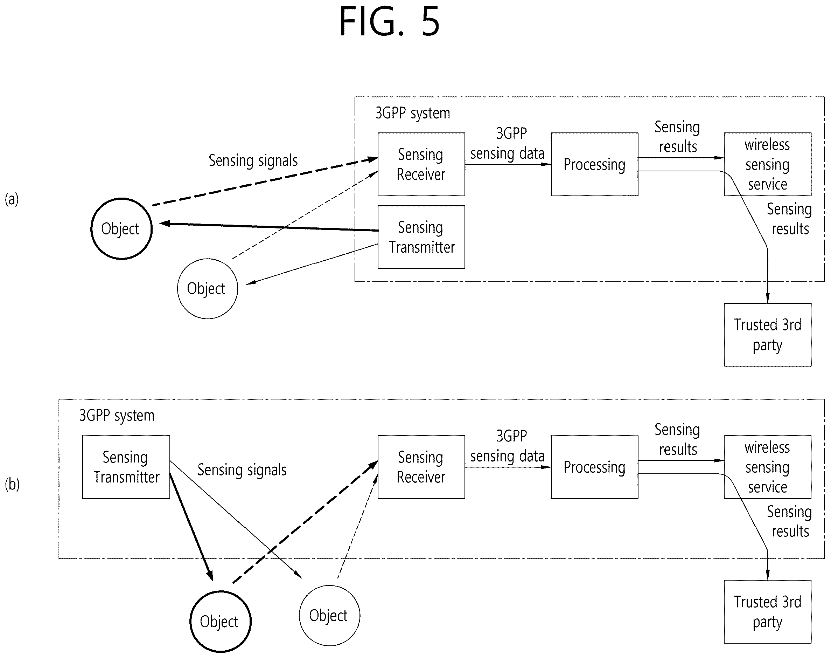

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Beamforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 5 shows an example of a sensing operation, based on an embodiment of the present disclosure. The embodiment of FIG. 5 may be combined with various embodiments of the present disclosure. Specifically, (a) of FIG. 5 illustrates an example of sensing using a sensing receiver and a sensing transmitter at the same location (e.g., monostatic sensing), and (b) of FIG. 5 illustrates an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

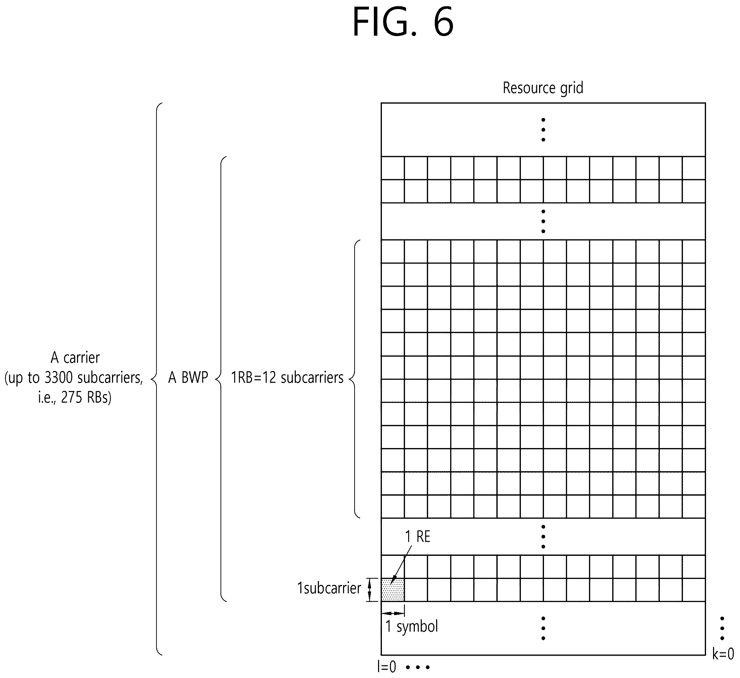

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier.

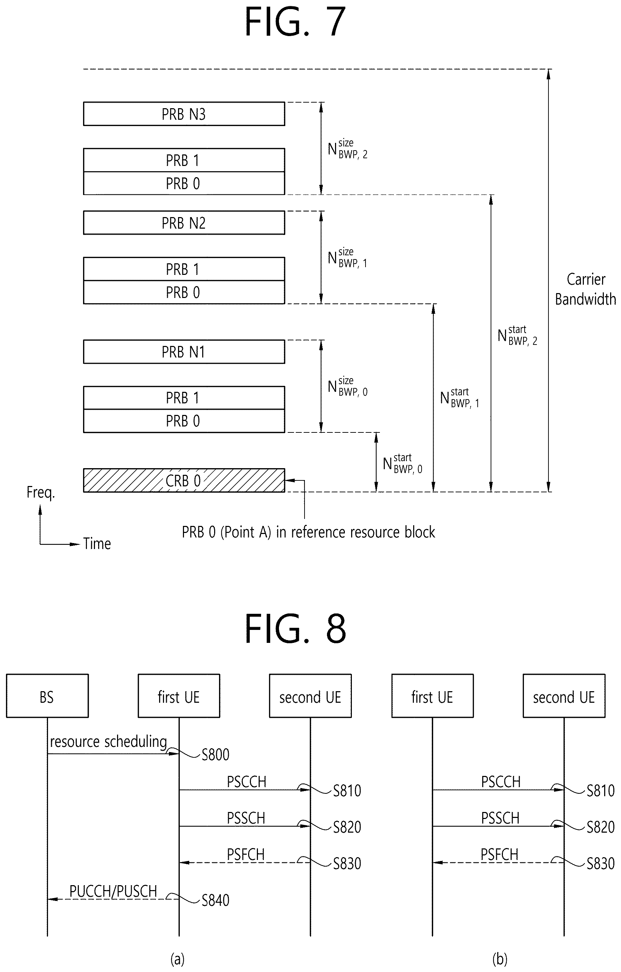

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL) -specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to the sidelink, a physical control channel related to the sidelink, etc. In the present disclosure, PSSCH may be replaced with a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in the resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a wireless communication system supporting an unlicensed band/shared spectrum will be described.

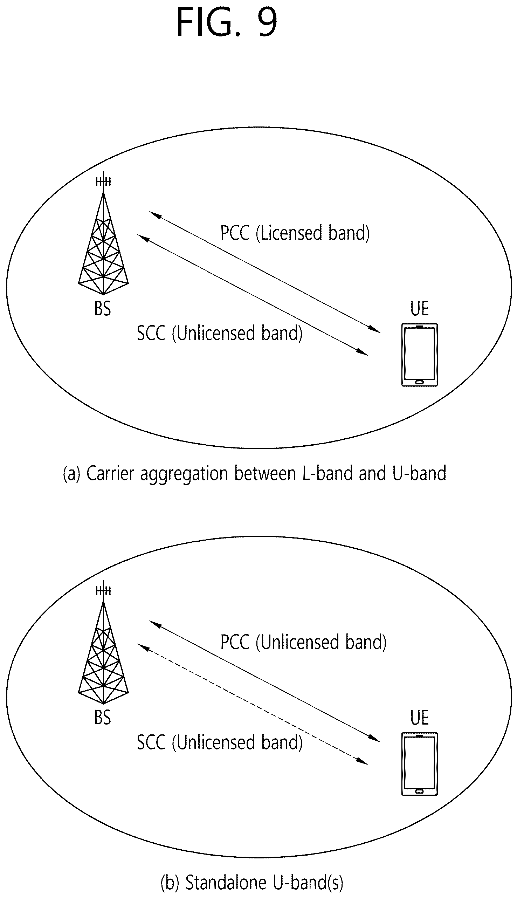

FIG. 9 shows an example of a wireless communication system supporting an unlicensed band, based on an embodiment of the present disclosure. For example, FIG. 9 may include an unlicensed spectrum (NR-U) wireless communication system. The embodiment of FIG. 9 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 9, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 9. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 9, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 us. The base station or the UE senses a channel during a sensing slot duration. If power detected for at least 4 us within the sensing slot duration is less than an energy detection threshold Xₜₕᵣₑₛₕ, the sensing slot duration Tsl is considered to be idle. Otherwise, the sensing slot duration Tsl = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

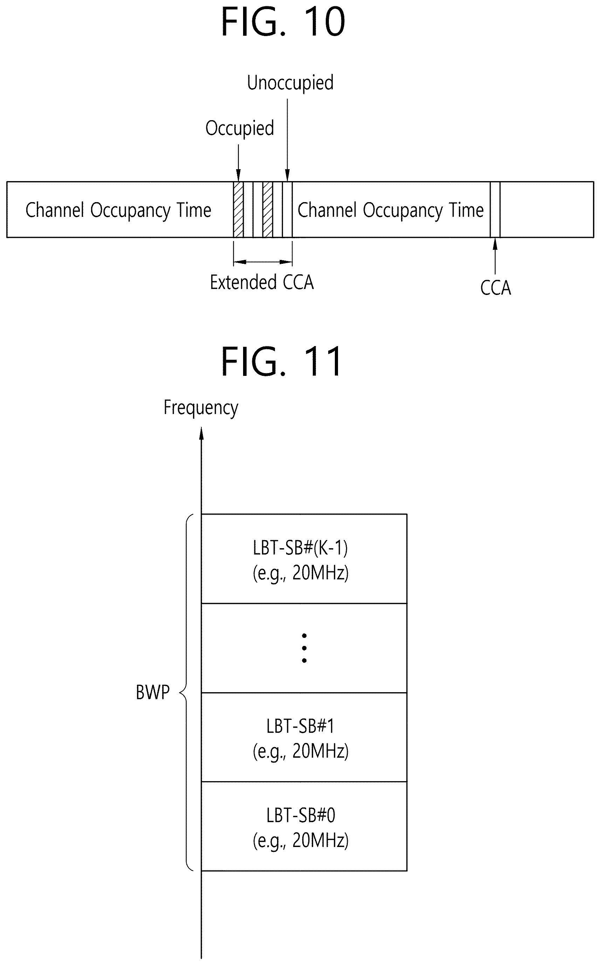

FIG. 10 shows a method of occupying resources in an unlicensed band, based on an embodiment of the present disclosure. The embodiment of FIG. 10 may be combined with various embodiments of the present disclosure.

Referring to FIG. 10, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 3 shows an example of the channel access procedure (CAP) supported in NR-U.

**[Table 3]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 3, the LBT type or CAP for DL/UL/SL transmission may be defined. However, Table 3 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 11 shows a case in which a plurality of LBT-SBs are included in an unlicensed band, based on an embodiment of the present disclosure. The embodiment of FIG. 11 may be combined with various embodiments of the present disclosure.

Referring to FIG. 11, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 4 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 4]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

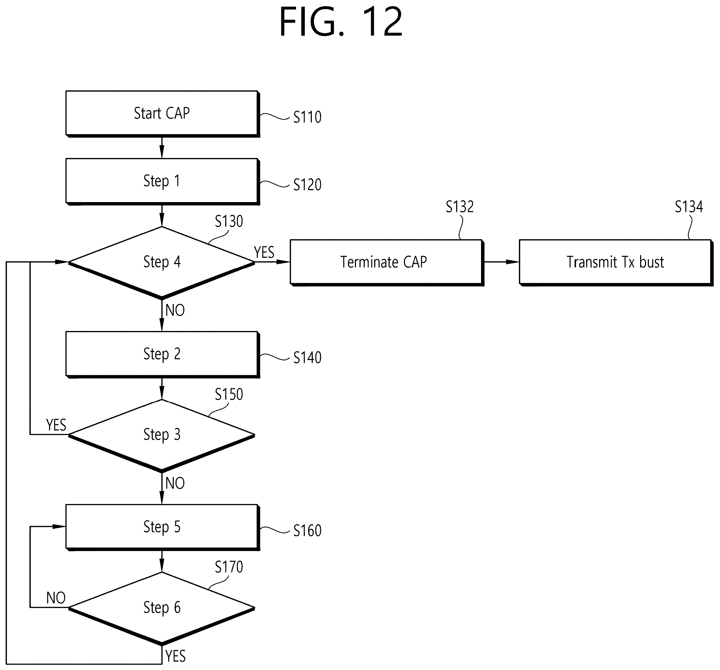

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration Td. Then, if a counter N is zero, the base station may perform transmission (S134). In this case, the base station may adjust the counter N by sensing the channel for additional sensing slot duration(s) according to the following steps:

Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration T_{d} or all the slots of the additional defer duration T_{d} are detected to be idle.

Step 6) (S170) If the channel is sensed to be idle for all the slot durations of the additional defer duration Td (Y), step 4 proceeds. Otherwise (N), step 5 proceeds.

Table 5 shows that mₚ, a minimum contention window (CW), a maximum CW, a maximum channel occupancy time (MCOT), and an allowed CW size, which are applied to the CAP, vary depending on channel access priority classes.

**[Table 5]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 5, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f}= 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

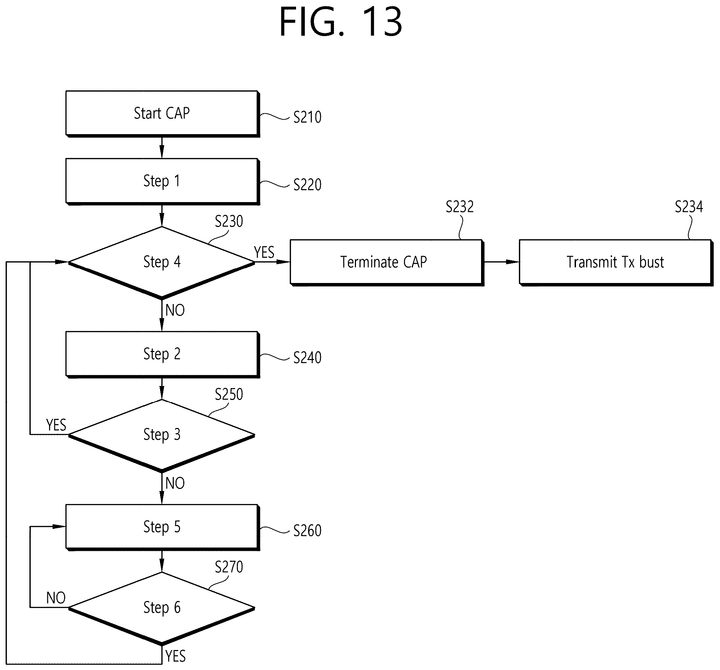

FIG. 13 shows type 1 CAP operations performed by a UE to transmit an uplink signal, based on an embodiment of the present disclosure. The embodiment of FIG. 13 may be combined with various embodiments of the present disclosure.

Referring to FIG. 13, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:

Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration T_{d} or all the slots of the additional defer duration T_{d} are detected to be idle.

Step 6) (S270) If the channel is sensed to be idle for all the slot durations of the additional defer duration Td (Y), step 4 proceeds. Otherwise (N), step 5 proceeds.

Table 6 shows that mₚ, a minimum CW, a maximum CW, a maximum channel occupancy time (MCOT), and an allowed CW size, which are applied to the CAP, vary depending on channel access priority classes.

**[Table 6]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 6, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration Td is configured in the following order: duration T_{f} (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CAPC (e.g., minimum contention window size, maximum contention window size, mₚ, etc.). For example, the UE may select a backoff counter (BC) after selecting a random value between 0 and CW (e.g., the minimum CW and the maximum CW mapped to the CAPC). In this case, for example, the BC may be a positive integer less than or equal to the random value. The UE that senses a channel decrements BC by 1 when the channel is idle. When the BC becomes zero and the UE detects that the channel is idle for the time T_{d} (T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f} (= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

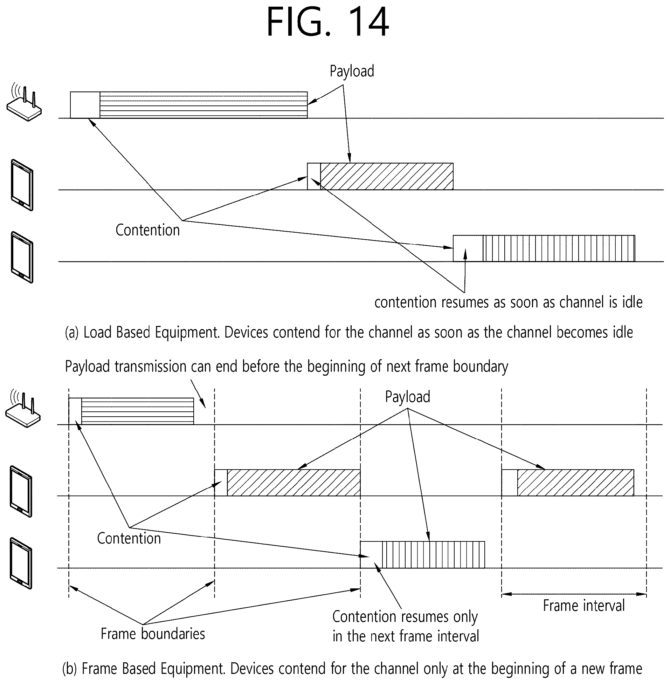

FIG. 14 shows a channel access procedure, based on an embodiment of the present disclosure. Specifically, (a) of FIG. 14 shows an example of a dynamic channel access procedure (load based equipment, LBE), and (b) of FIG. 14 shows an example of a semi-static channel access procedure (frame based equipment, FBE). The embodiment of FIG. 14 may be combined with various embodiments of the present disclosure.

Referring to (a) of FIG. 14, if a channel is idle, the UE may perform contention with other UEs on an unlicensed band to immediately occupy the channel. In addition, if the UE occupies the channel, the UE may transmit data.

Referring to (b) of FIG. 14, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins.

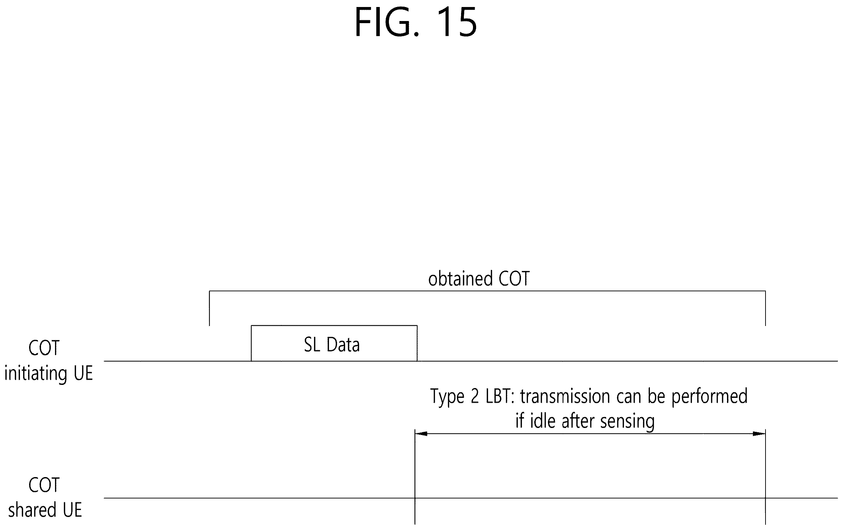

FIG. 15 shows a method for a UE to obtain a shared channel occupancy time (COT) in an unlicensed band according to an embodiment of the present disclosure. The embodiment of FIG. 15 may be combined with various embodiments of the present disclosure.

Referring to FIG. 15, the UE generating the shared COT (e.g., the COT initiating UE) may share the obtained COT with a counterpart UE as follows. For example, the UE generating/obtaining the COT may transmit the obtained shared COT to the counterpart UE through SCI or MAC CE or PC5-RRC message. For example, when the obtained shared COT is transmitted through the SCI, the obtained shared COT may be transmitted to a destination UE for a unicast link (a pair of an L1 source ID and an L1 destination ID), and the obtained shared COT may be transmitted to a destination UE for groupcast/broadcast (a groupcast/broadcast L1 destination ID). For example, when the obtained shared COT is transmitted through the MAC CE (e.g., SL COT information MAC CE), the obtained shared COT may be transmitted to a destination UE for a unicast link (a pair of an L1/L2 source ID and an L1/L2 destination ID), and the obtained shared COT may be transmitted to a destination UE for groupcast/broadcast (a groupcast/broadcast L1/L2 destination ID). For example, a UE that received the shared COT from the UE generating the shared COT (e.g., the COT responding UE) may perform type 2 LBT (for example, type 2A LBT or type 2B LBT: when the channel is confirmed to be idle for a certain time by performing a sensing operation, the UE may transmit SL data to be transmitted by itself within the shared COT; or, for example, type 2C LBT: the UE may transmit SL data immediately without sensing for a certain time) after the transmission of the UE generating the shared COT is completed within the shared COT. For example, the shared COT information transferred by the COT initiating UE to the COT responding UE may include information such as a shCared COT duration, a shared COT starting offset, and an SL-CAPC value to be used by the COT responding UE.

Additionally, for example, after the COT initiating UE shares a shared COT with the COT responding UE, the COT initiating UE may withdraw the shared COT. For example, the COT initiating UE may withdraw the shared COT from the COT responding UE through COT withdrawal signaling (e.g., SCI, or MAC CE, or a PC5 RRC message). For example, a COT withdrawal message may include "a starting time point of the withdrawn COT" and "an ending time point of the withdrawn COT" to indicate a withdrawn COT duration.

For example, in a sidelink unlicensed band (SL-U), a transmission UE performing sidelink communication may perform an LBT operation to occupy a channel of the unlicensed band. For example, when the UE succeeds in the LBT, the UE may transmit a packet on the occupied channel. For example, when the LBT fails (e.g., when a result that the channel is busy is derived based on the UE performing sensing during a sensing slot duration), the UE may not perform sidelink transmission because the channel of the unlicensed band is not occupied.

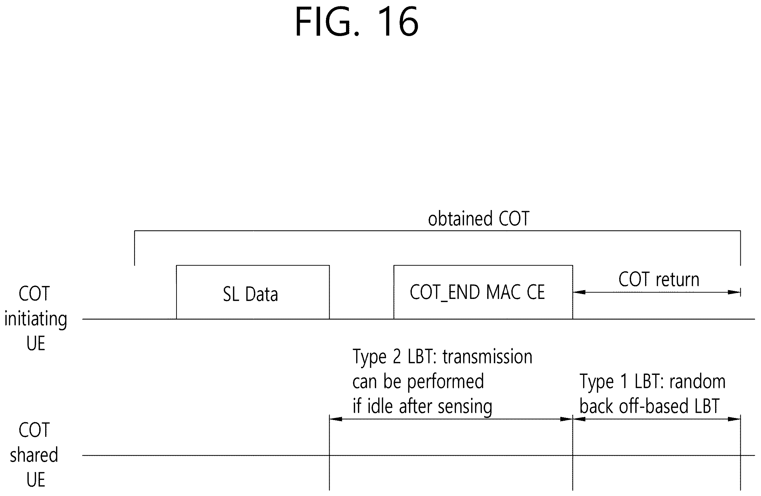

FIG. 16 shows a method in which a UE that has generated a COT returns the COT obtained by the UE, based on an embodiment of the present disclosure. The embodiment of FIG. 16 may be combined with various embodiments of the present disclosure.

Referring to FIG. 16, a UE that has generated/obtained a COT and has shared the COT with a counterpart UE may transfer a COT END MAC CE to the counterpart UE to return the secured COT. For example, the COT END MAC CE may be transmitted to a destination UE for a unicast link (a pair of L1/L2 source ID and L1/L2 destination ID), and may be transmitted to a groupcast/broadcast destination UE (a groupcast/broadcast L1/L2 destination ID).

For example, from a time when a UE receives a COT END MAC CE until an expiration time of a previously shared COT, the UE receiving the COT END MAC CE may perform type 1 LBT to transmit SL data. For example, until the COT END MAC CE is received, the UE that has received the shared COT may perform type 2 LBT to transmit SL data within the shared COT until the COT expires. For example, the COT return may be made not only through a MAC CE but also through an SCI or a PC5-RRC message. For example, the COT return may be transmitted through an SCI to a destination UE for a unicast link (a pair of L1 source ID and L1 destination ID), and may be transmitted to a groupcast/broadcast destination UE (a groupcast/broadcast L1 destination ID).

Meanwhile, for example, an SL-Channel Access Priority Class (CAPC) applied by a sidelink UE to perform LBT in a sidelink unlicensed band may be defined as follows.
- an SL-CAPC mapped to each type of data traffic corresponding to the SL-CAPC may be defined.
- a contention window size (CWS) and a maximum COT value for each SL-CAPC may be defined.
- SL-CAPC 1 (a class having the highest priority): it may have the smallest contention window size among the SL-CAPCs. For example, because the contention window size is the smallest, the shortest time may be required until the channel is occupied. For example, the smallest time may be consumed for a Clear Channel Assessment (CCA) (e.g., a process of determining whether the channel is busy or idle).
- SL-CAPC 2
- SL-CAPC 3
- SL-CAPC 4 (a class having the lowest priority): it may have the largest contention window size among the SL-CAPCs. For example, because the contention window size is the largest, the longest time may be required until the channel is occupied. For example, the largest time may be consumed for a CCA (e.g., a process of determining whether the channel is busy or idle).

Additionally, for example, the SL-CAPC may be defined to be mapped to a PQI as shown in Table 7 below. For example, multiple SL-CAPC values may be defined to be configured for the same PQI, and the same SL-CAPC may be mapped to different PQIs.

**[Table 7]**

| PQI value | Resource type | SL-CAP C | Default priority level | Packet delay budget | Packet error rate | Default maximum data burst volume | Default averaging window | Example services |
|---|---|---|---|---|---|---|---|---|
| 21 | GBR (NOTE) | 1, 2 | 4 | 20ms | 10⁻⁴ | N/A | 2000ms | Platooning between UEs - Higher degree of automation; |
| | | | | | | | | Platooning between UE and RSU - Higher degree of automation |
| 22 | | 2, 3 | 4 | 50ms | 10⁻² | N/A | 2000ms | Sensor sharing - higher degree of automation |
| 23 | | 2, 3 | 3 | 100ms | 10⁻⁴ | N/A | 2000ms | Information sharing for automated driving - between UEs or UE and RSU - higher degree of automation |
| 55 | Non-GBR | 1, 2 | 3 | 10ms | 10⁻⁴ | N/A | N/A | Cooperative lane change - higher degree of automation |
| 56 | | 3, 4 | 6 | 20ms | 10⁻¹ | N/A | N/A | Platooning informative exchange - low degree of automation; |
| | | | | | | | | Platooning - information sharing with RSU |
| 57 | | 3, 4 | 5 | 25ms | 10⁻¹ | N/A | N/A | Cooperative lane change - lower degree of automation |
| 58 | | 2, 3 | 4 | 100ms | 10⁻² | N/A | N/A | Sensor information sharing - lower degree of automation |
| 59 | | 3, 4 | 6 | 500ms | 10⁻¹ | N/A | N/A | Platooning - reporting to an RSU |
| 90 | Delay Critical GBR (NOTE) | 1, 2 | 3 | 10ms | 10⁻⁴ | 2000 byte | 2000ms | Cooperative collision avoidance; |
| | | | | | | | | Sensor sharing - Higher degree of automation; |
| | | | | | | | | Video sharing - higher degree of automation |
| 91 | | 1, 2 | 2 | 3ms | 10⁻⁵ | 2000 byte | 2000ms | Emergency trajectory alignment; |
| | | | | | | | | Sensor sharing - Higher degree of automation |
| NOTE: GBR and Delay Critical GBR PQIs can only be used for unicast PC5 communications. | | | | | | | | |

For example, the SL-CAPC (e.g., an SL-CAPC that the UE may use immediately) may be configured by a base station and transferred to the UE (e.g., transferred through a PDCCH), or may be pre-defined and used by out-of-coverage UEs.

For example, when sidelink data available for a logical channel occurs, a transmission UE may perform a logical channel prioritization (LCP) procedure and may generate a MAC PDU by performing a multiplexing procedure for sidelink logical channel data (e.g., MAC SDUs).

Additionally, for example, when the transmission UE completes an MAC PDU generation operation, the UE may perform an operation of occupying a channel of a sidelink unlicensed band to transmit the generated MAC PDU. That is, for example, the transmission UE may perform sidelink LBT to find an idle channel, may occupy the channel, and may transmit the generated MAC PDU (or a transport block (TB)) to a counterpart UE through the occupied channel.

Meanwhile, according to the prior art, a COT responding UE that has received a shared COT from a COT initiating UE may perform type 2 LBT within the shared COT to perform a transmission to the COT initiating UE. And, when a remaining COT duration exists in the shared COT after the COT responding UE performs the transmission, the COT responding UE may return the remaining COT to the COT initiating UE. Alternatively, even if the COT initiating UE shares the COT with the COT responding UE, the COT initiating UE may withdraw the sharing (or retrieve the COT). However, when the COT initiating UE withdraws the COT sharing (or retrieves the COT) from the COT responding UE, the following problems may occur. For example, even when a transmission priority of data that the COT initiating UE intends to transmit within the COT is lower than a transmission priority of data that the COT responding UE intends to transmit within the COT, if the shared COT is withdrawn by the COT initiating UE, the COT responding UE may have to perform the transmission based on type 1 LBT instead of type 2 LBT, and thus a delay may occur in transmitting high priority data. In this case, for example, a quality of service based on transmission and reception of high priority data, such as a real-time service, may be degraded. Alternatively, for example, even when a transmission priority of data that the COT initiating UE intends to transmit within the COT is lower than a transmission priority of data that the COT responding UE intends to transmit within the COT, if the shared COT is withdrawn by the COT initiating UE, the COT initiating UE may use resources within the shared COT and the COT responding UE may not use resources within the shared COT, and thus fairness of resource distribution or efficiency of resource use may be degraded.

In the present disclosure, when the COT initiating UE withdraws a shared COT after sharing the COT with the COT responding UE, a method for unlicensed-band operation of the COT responding UE and a device supporting the same are proposed as follows.

For example, the COT initiating UE may withdraw the shared COT shared with the COT responding UE through SCI, MAC CE, or PC5 RRC message.

For example, the signal transmitted by the COT initiating UE to withdraw the COT may include the following information and be transferred to the COT responding UE.
- an SL CAPC value that the COT initiating UE uses for type 1 LBT (or type 2 LBT) in the COT that the COT initiating UE withdraws

In this case, for example, (for the purpose of indication of the SL CAPC value) when a representative SL CAPC value of logical channel data of the COT responding UE is less than or equal to (or greater than or equal to) the SL CAPC value included in the COT withdrawal signal of the COT initiating UE, the COT responding UE may continue to perform type 2 LBT within the shared COT already received from the COT initiating UE, and may also apply enhanced LCP to perform sidelink data transmission. For example, the enhanced LCP may refer to the following UE operation. That is, for example, when the COT responding UE receives the shared COT information from the COT initiating UE, the UE may filter only logical channel data whose destination layer-2 ID is identical to the source layer-2 ID of the COT initiating UE among its logical channel data, and may generate an MAC PDU. Alternatively, for example, when the COT responding UE receives the shared COT information (and/or a COT withdrawal signal) from the COT initiating UE, the UE may filter only logical channel data whose representative SL CAPC value is less than or equal to the SL CAPC value indicated in the shared COT (or the COT withdrawal signal), and may generate an MAC PDU. Alternatively, for example, when the COT responding UE has a generated sidelink grant, the UE may use the shared COT (and/or the withdrawn COT) only when the generated sidelink grant resource exists within the (withdrawn) COT duration of the shared COT (and/or the COT withdrawal signal).
- an SL priority value related to a PSSCH to be transmitted in the withdrawn COT
- a COT duration that the COT initiating UE withdraws (e.g., when only a part of the shared COT is withdrawn)

For example, when the COT responding UE receives a COT withdraw signal from the COT initiating UE after generating an enhanced LCP-based MAC PDU, the UE may perform the following operation (because the enhanced LCP is applied, the generated sidelink grant exists within the COT duration).
- (Operation option 1) For example, when the COT responding UE receives a COT withdrawal signal (e.g., an SCI) from the COT initiating UE, the UE may return to a legacy LCP procedure (e.g., an existing MAC PDU generation procedure without applying the enhanced LCP) in a remaining COT (e.g., a COT duration that has not yet been used and is still remaining), and may perform a channel access operation based on type 1 LBT. Additionally, for example, a remaining generated sidelink grant may be discarded or may continue to be used for MAC PDU transmission based on the legacy LCP procedure. For example, when the COT responding UE generates a new sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, such a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.
- (Operation option 2) When the COT responding UE receives a COT withdrawal signal (e.g., an SCI) from the COT initiating UE, the UE may generate an MAC PDU by applying the enhanced LCP during a remaining COT (e.g., a COT duration that has not yet been used and is still remaining), and may also apply type 2 LBT-based channel access during the remaining COT. For example, the enhanced LCP may refer to the following UE operation. That is, for example, when the COT responding UE receives the shared COT information from the COT initiating UE, the UE may filter only logical channel data whose destination layer-2 ID is identical to the source layer-2 ID of the COT initiating UE among its logical channel data, and may generate an MAC PDU. Alternatively, for example, when the COT responding UE receives the shared COT information from the COT initiating UE, the UE may filter only logical channel data whose representative SL CAPC value is less than or equal to the SL CAPC value indicated in the shared COT (and/or the withdrawn COT), and may generate an MAC PDU. For example, when the COT responding UE has a generated sidelink grant, the UE may use the shared COT (and/or the withdrawn COT) only when the generated sidelink grant resource exists within the COT duration of the shared COT (and/or the withdrawn COT).

For example, when the COT responding UE receives a COT withdrawal signal from the COT initiating UE before generating an enhanced LCP-based MAC PDU, the UE may perform the following operation.

For example, when the COT responding UE has an already generated sidelink grant, if the generated sidelink grant is a sidelink grant that is not included within the COT duration of the received shared COT (and/or the withdrawn COT), the UE may perform the following operation. For example, the COT responding UE may perform a legacy LCP procedure during a remaining COT (e.g., a COT duration that has not yet been used and is still remaining), and may perform a type 1 LBT-based channel access procedure. Alternatively, for example, the generated sidelink grant may be used for transmission of an MAC PDU generated based on the legacy LCP. For example, when the COT responding UE generates a new sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.

Alternatively, for example, when the COT responding UE has an already generated sidelink grant, if the generated sidelink grant is a sidelink grant that is included within the COT duration of the received shared COT, the UE may perform the following operation.
- (Operation 1) The COT responding UE may perform a legacy LCP procedure during a remaining COT (e.g., a COT duration that has not yet been used and is still remaining), and/or may perform a type 1 LBT-based channel access procedure. Alternatively, for example, the generated sidelink grant may be used for transmission of an MAC PDU generated based on the legacy LCP. For example, when the COT responding UE generates a new sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.
- (Operation 2) When a representative SL CAPC value of logical channel data of the COT responding UE is less than or equal to (or greater than or equal to) the SL CAPC value included in the COT withdrawal signal of the COT initiating UE, the UE may continue to perform type 2 LBT within the shared COT (and/or the withdrawn COT) already received from the COT initiating UE, and may also apply the enhanced LCP to perform sidelink data transmission. For example, the enhanced LCP may refer to the following UE operation. That is, for example, when the COT responding UE receives the shared COT information (and/or the withdrawn COT) from the COT initiating UE, the UE may filter only logical channel data whose destination layer-2 ID is identical to the source layer-2 ID of the COT initiating UE among its logical channel data, and may generate an MAC PDU. Alternatively, for example, when the COT responding UE receives the shared COT information (and/or the withdrawn COT) from the COT initiating UE, the UE may filter only logical channel data whose representative SL CAPC value is less than or equal to the SL CAPC value indicated in the shared COT (and/or the withdrawn COT), and may generate an MAC PDU.

Alternatively, for example, when the COT responding UE has a generated sidelink grant, the UE may use the shared COT (and/or the withdrawn COT) only when the generated sidelink grant resource exists within the COT duration of the shared COT (and/or the withdrawn COT). Additionally, for example, when the COT responding UE newly generates a sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.
- (Operation 3) When the COT responding UE receives a COT withdrawal signal from the COT initiating UE before generating a sidelink grant, the UE may perform the following operation. For example, the COT responding UE may generate an MAC PDU based on a legacy LCP procedure during a remaining COT duration. Alternatively, for example, the COT responding UE may perform a type 1 LBT-based channel access procedure. Alternatively, for example, when generating a sidelink grant, whether the COT responding UE generates a sidelink grant that is included within the remaining COT duration or generates a sidelink grant that is not included within the remaining COT duration may be left to UE implementation. Alternatively, for example, when generating a sidelink grant, the COT responding UE may generate a sidelink grant that is included within the remaining COT duration. Alternatively, for example, when generating a sidelink grant, the COT responding UE may generate a sidelink grant that is not included within the remaining COT duration. For example, when the COT responding UE generates a new sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.

For example, the COT initiating UE may withdraw the shared COT from the COT responding UE without a COT withdrawal signal. For example, when the COT responding UE receives sidelink data (e.g., a PSCCH and a PSSCH) from the COT initiating UE during the shared COT duration, the COT responding UE may regard the COT initiating UE as having withdrawn the shared COT. For example, when the COT initiating UE withdraws the shared COT without COT withdrawal signaling, UE procedures in such a case may be proposed as in the embodiments below.

For example, when the COT responding UE receives the shared COT (and/or the withdrawn COT) information from the COT initiating UE and generates an enhanced LCP-based MAC PDU, and then the COT is withdrawn (e.g., determined by detecting the PSCCH/PSSCH of the COT initiating UE within the COT duration), the UE may perform the following operation (because the enhanced LCP is applied, the generated sidelink grant is included within the COT duration).
- (Operation option 1) When the COT responding UE detects the PSCCH/PSSCH of the COT initiating UE within the COT duration, the UE may fall back to a legacy LCP procedure in the remaining COT and may perform type 1 LBT-based channel access. For example, a remaining grant may be discarded or may continue to be used for MAC PDU transmission based on the legacy LCP. And, for example, a newly generated grant may perform a resource selection operation based on Inter-UE LBT blocking (e.g., option 1: the UE may avoid selecting N consecutive resource(s) before a reserved resource having a higher L1 SL priority).
- (Operation option 2) For example, even when the COT responding UE detects the PSCCH/PSSCH of the COT initiating UE within the COT duration, the COT responding UE may maintain the enhanced LCP and type 2 LBT during the remaining COT (when its own priority is a higher priority). And, for example, a newly generated grant may perform a resource selection operation based on Inter-UE LBT blocking (option 1: the UE may avoid selecting N consecutive resource(s) before a reserved resource having a higher L1 SL priority).

For example, when the COT responding UE receives sidelink data (e.g., a PSCCH + a PSSCH) from the COT initiating UE in a remaining COT duration after generating an enhanced LCP-based MAC PDU, the UE may perform the following operation (e.g., because the enhanced LCP is applied, the generated sidelink grant exists within the COT duration).
- (Operation option 1) For example, when the COT responding UE receives sidelink data (e.g., a PSCCH + a PSSCH) from the COT initiating UE in a remaining COT duration, the UE may fall back to a legacy LCP procedure (e.g., an existing MAC PDU generation procedure without applying the enhanced LCP) in the remaining COT (e.g., a COT duration that has not yet been used and is still remaining), and may perform a type 1 LBT-based channel access operation. Additionally, for example, a remaining generated sidelink grant may be discarded or may continue to be used for MAC PDU transmission based on the legacy LCP procedure. For example, when the COT responding UE generates a new sidelink grant, the UE may perform a resource selection operation based on Inter-UE LBT blocking. For example, when the COT responding UE receives sidelink data (e.g., a PSCCH + a PSSCH) from the COT initiating UE in the remaining COT duration, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.
- (Operation option 2) For example, when the COT responding UE receives sidelink data (e.g., a PSCCH + a PSSCH) from the COT initiating UE in a remaining COT duration, the UE may generate an MAC PDU by applying the enhanced LCP during the remaining COT (e.g., a COT duration that has not yet been used and is still remaining), and may also apply type 2 LBT-based channel access during the remaining COT. For example, the enhanced LCP may refer to the following UE operation. That is, for example, when the COT responding UE receives the shared COT information from the COT initiating UE, the UE may filter only logical channel data whose destination layer-2 ID is identical to the source layer-2 ID of the COT initiating UE among its logical channel data, and may generate an MAC PDU. Alternatively, for example, when the COT responding UE receives the shared COT (and/or the withdrawn COT) information from the COT initiating UE, the UE may filter only logical channel data whose representative SL CAPC value is less than or equal to the SL CAPC value indicated in the shared COT (and/or the withdrawn COT), and may generate an MAC PDU. Alternatively, for example, when the COT responding UE has a generated sidelink grant, the UE may use the shared COT (and/or the withdrawn COT) only when the generated sidelink grant resource exists within the COT duration of the shared COT (and/or the withdrawn COT).

For example, when the COT responding UE receives shared COT information from the COT initiating UE and detects COT withdrawal from the COT initiating UE before generating an enhanced LCP-based MAC PDU (e.g., determined by detecting the PSCCH/PSSCH of the COT initiating UE within the COT duration), the UE may perform the following operation.
- (Operation 1) For example, when the COT responding UE has an already generated sidelink grant (e.g., a grant that is not included within the COT duration), the COT responding UE may perform a legacy LCP procedure during a remaining COT (e.g., a COT duration that has not yet been used and is still remaining), and may perform a type 1 LBT-based channel access procedure. For example, the generated sidelink grant may be used for transmission of an MAC PDU generated based on the legacy LCP. For example, when the COT responding UE generates a new sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.
- (Operation 2) For example, when the COT responding UE has an already generated sidelink grant (e.g., a grant that is included within the COT duration), the COT responding UE may perform a legacy LCP procedure during a remaining COT (e.g., a COT duration that has not yet been used and is still remaining), and/or may perform a type 1 LBT-based channel access procedure. Alternatively, for example, the generated sidelink grant may be used for transmission of an MAC PDU generated based on the legacy LCP. For example, when the COT responding UE generates a new sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE. Alternatively, for example, when the COT responding UE detects a COT withdrawal of the COT initiating UE, the UE may continue to perform type 2 LBT within the shared COT (and/or the withdrawn COT) already received from the COT initiating UE when a representative SL CAPC value of its logical channel data is less than or equal to (or greater than or equal to) the SL CAPC value included in the SCI, and may also apply the enhanced LCP to perform sidelink data transmission. For example, the enhanced LCP may refer to the following UE operation. That is, for example, when the COT responding UE receives the shared COT (and/or the withdrawn COT) information from the COT initiating UE, the UE may filter only logical channel data whose destination layer-2 ID is identical to the source layer-2 ID of the COT initiating UE among its logical channel data, and may generate an MAC PDU. Alternatively, for example, when the COT responding UE receives the shared COT (and/or the withdrawn COT) information from the COT initiating UE, the UE may filter only logical channel data whose representative SL CAPC value is less than or equal to the SL CAPC value indicated in the shared COT (or the SL CAPC value included in a signal related to the COT withdrawal), and may generate an MAC PDU. Alternatively, for example, when the COT responding UE has a generated sidelink grant, the UE may use the shared COT only when the generated sidelink grant resource exists within the COT duration of the shared COT (and/or the withdrawn COT). Additionally, for example, when the COT responding UE newly generates a sidelink grant, the UE may perform a resource selection operation based on Inter-UE LBT blocking. For example, when the COT responding UE detects a COT withdrawal from the COT initiating UE and receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE. Alternatively, for example, when the representative SL CAPC value of logical channel data of the COT responding UE is less than or equal to (or greater than or equal to) the SL CAPC value included in a signal related to the COT withdrawal of the COT initiating UE (e.g., sidelink data) or the SL CAPC value included in the shared COT (or the SL CAPC value included in a signal related to the COT withdrawal), the UE may continue to perform type 2 LBT within the shared COT (and/or the withdrawn COT) already received from the COT initiating UE, and may also apply the enhanced LCP to perform sidelink data transmission. For example, the enhanced LCP may refer to the following UE operation. That is, for example, when the COT responding UE receives the shared COT information (or a signal related to the COT withdrawal: for example, sidelink data) from the COT initiating UE, the UE may filter only logical channel data whose destination layer-2 ID is identical to the source layer-2 ID of the COT initiating UE among its logical channel data, and may generate an MAC PDU. Alternatively, for example, when the COT responding UE receives the shared COT (and/or the withdrawn COT) information from the COT initiating UE, the UE may filter only logical channel data whose representative SL CAPC value is less than or equal to the SL CAPC value indicated in the shared COT (and/or the withdrawn COT) (or the SL CAPC value included in a signal related to the COT withdrawal), and may generate an MAC PDU. Alternatively, for example, when the COT responding UE has a generated sidelink grant, the UE may use the shared COT (and/or the withdrawn COT) only when the generated sidelink grant resource exists within the COT duration of the shared COT (and/or the withdrawn COT). Additionally, for example, when the COT responding UE newly generates a sidelink grant, the UE may perform a resource selection operation based on Inter-UE LBT blocking. For example, when the COT responding UE receives a COT withdrawal signal (or a COT withdrawal signal + sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.
- (Operation 3) For example, when the COT responding UE receives a signal related to the COT withdrawal (e.g., sidelink data) from the COT initiating UE before generating a sidelink grant, the UE may perform the following operation. For example, the COT responding UE may generate an MAC PDU based on a legacy LCP procedure during a remaining COT duration. Alternatively, for example, the COT responding UE may perform a type 1 LBT-based channel access procedure. Alternatively, for example, when generating a sidelink grant, whether the COT responding UE generates a sidelink grant that is included within the remaining COT duration or generates a sidelink grant that is not included within the remaining COT duration may be left to UE implementation. Alternatively, for example, when generating a sidelink grant, the COT responding UE may generate a sidelink grant that is included within the remaining COT duration. Alternatively, for example, when generating a sidelink grant, the COT responding UE may generate a sidelink grant that is not included within the remaining COT duration. For example, when the COT responding UE generates a new sidelink grant, the UE may perform a resource selection operation based on Inter-UE LBT blocking. For example, when the COT responding UE receives a signal related to the COT withdrawal (e.g., sidelink data) from the COT initiating UE, or receives a PSCCH/PSSCH (e.g., an SCI + data) using the withdrawn COT, the N consecutive resource(s) prior to time for which the COT initiating UE reserved the resource through the SCI may be excluded from the resource selection. For example, a resource exclusion operation based on Inter-UE LBT blocking may be limited to a case where a (Layer 1) sidelink priority of transmission data of the COT initiating UE is higher (or lower) than a (Layer 1) sidelink priority of logical channel data of the COT responding UE.

For example, (when the COT responding UE receives an instruction to withdraw the COT after generating a sidelink grant) if a COT responding UE receives shared COT information from a COT initiating UE, and then performs an enhanced LCP and type 2 LBT-based channel access procedure to perform SL data transmission operations, and is instructed to withdraw the COT from the COT initiating UE (e.g., through explicit COT withdraw signaling, or implicitly through reception of a PSCCH/PSSCH), the UE may drop a MAC PDU transmission based on the generated sidelink grant (or drop the generated MAC PDU), or may trigger a resource (re)selection procedure when the following condition is satisfied.
- (Condition) For example, when the COT responding UE receives an instruction to withdraw the COT from the COT initiating UE and has to return the shared COT, if the COT withdrawal duration is a duration in which the COT responding UE does not have sufficient time to perform type 1 LBT (e.g., a duration in which sufficient sensing and/or an LBT duration for performing type 1 LBT is not guaranteed)

For example, the COT initiating UE may determine a transmission timing of the COT withdrawal signaling (e.g., through explicit COT withdrawal signaling or implicitly through reception of a PSCCH/PSSCH) by considering M slots (e.g., a COT withdrawal duration or a COT withdrawal timing) to guarantee the type 1 LBT of the COT responding UE. For example, the value "M" may be pre-configured, or may be configured by a base station for the UE through a system information block (SIB) or a dedicated RRC message (e.g., based on an SL CAPC value, or based on a logical channel, or based on an SL priority). Additionally, for example, the value "M" may be used by the COT responding UE for the following purposes. For example, when a transmission symbol of a reserved resource overlaps with an LBT of a selected resource, the UE may avoid selecting M consecutive resource(s) after the reserved resource. Additionally, for example, when a generated sidelink grant of the COT responding UE does not satisfy the following condition (e.g., when a transmission symbol of a reserved resource overlaps with an LBT of a selected resource, the UE may avoid selecting M consecutive resource(s) after the reserved resource), the UE may drop a MAC PDU transmission based on the generated sidelink grant or may trigger a resource (re)selection procedure to (re)perform a resource selection (e.g., a resource selection in which a resource reserved by the UE does not overlap with a reserved resource of another UE so that the type 1 LBT of the UE is not collided). Additionally, for example, when the COT initiating UE indicates a duration for withdrawing the COT (e.g., by indicating a starting point and an ending point of the withdrawal, thereby indicating the starting point of the COT withdrawal and the ending point of the COT withdrawal), the corresponding COT withdrawal duration may be indicated to be greater than and/or equal to (or less than and/or equal to) the "M" slots.

For example, (when the COT responding UE receives an instruction to withdraw the COT from the COT initiating UE before generating a sidelink grant) if the COT responding UE receives the shared COT information from the COT initiating UE and performs an SL data transmission operation through the enhanced LCP and the type 2 LBT-based channel access procedure, and then receives an instruction to withdraw the COT from the COT initiating UE (e.g., through explicit COT withdrawal signaling, or implicitly through reception of a PSCCH/PSSCH), the UE may drop a MAC PDU transmission based on the sidelink grant to be generated (or drop the generated MAC PDU), or may trigger a resource (re)selection procedure when the following condition is satisfied.
- (Condition) When the COT responding UE receives an instruction to withdraw the COT from the COT initiating UE and has to return the shared COT, if the COT withdrawal duration is a duration in which the COT responding UE does not have sufficient time to perform type 1 LBT (e.g., a duration in which sufficient sensing and/or an LBT duration for performing type 1 LBT is not guaranteed)

For example, the COT initiating UE may determine a transmission timing of the COT withdrawal signaling (e.g., through explicit COT withdrawal signaling, or implicitly through reception of a PSCCH/PSSCH) by considering M slots (e.g., a COT withdrawal duration or a COT withdrawal timing) to guarantee the type 1 LBT of the COT responding UE. For example, the value "M" may be pre-configured or may be configured by a base station for the UE through a system information block (SIB) or a dedicated RRC message (e.g., based on an SL CAPC value, or based on a logical channel, or based on an SL priority). Additionally, for example, the value "M" may be used by the COT responding UE for the following purpose. For example, when a transmission symbol of a reserved resource overlaps with an LBT of a selected resource, the UE may avoid selecting M consecutive resource(s) after the reserved resource. Additionally, for example, the COT responding UE may perform a resource (re)selection procedure (e.g., a resource selection in which a resource reserved by the UE avoids overlapping with a reserved resource of another UE so that the type 1 LBT of the UE is not collided) such that a sidelink grant generated or to be generated by the COT responding UE satisfies the following condition (e.g., when a transmission symbol of a reserved resource overlaps with an LBT of a selected resource, the UE may avoid selecting M consecutive resource(s) after the reserved resource). Additionally, for example, when the COT initiating UE indicates a duration for withdrawing the COT (e.g., by indicating a starting point and an ending point, thereby indicating the starting point of the COT withdrawal and the ending point of the COT withdrawal), the indicated COT withdrawal duration may be indicated to be greater than and/or equal to (or less than and/or equal to) the "M" slots.

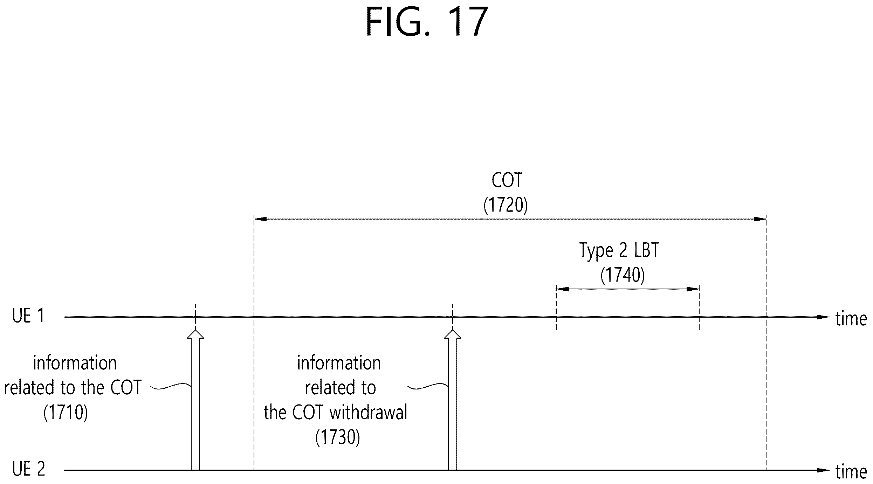

FIG. 17 shows an unlicensed-band operation of a COT responding UE that receives a COT withdrawal signal after receiving a shared COT from a COT initiating UE, based on an embodiment of the present disclosure. The embodiment of FIG. 17 may be combined with various embodiments of the present disclosure.

Referring to FIG. 17, UE 1 and UE 2 may be UEs that perform communication in an unlicensed band. For example, UE 1 may be a COT responding UE that receives a shared COT and performs a type 2 LBT-based transmission operation to a UE that shared the COT within the COT duration. For example, UE 2 may be a COT initiating UE that generates a COT based on type 1 LBT and shares the COT with a counterpart UE, and then performs reception from the counterpart UE within the COT duration. For example, UE 1 may receive information 1710 related to the COT from UE 2. For example, before receiving the information 1710 related to the COT from UE 2, UE 1 may request information related to the COT from UE 2. For example, UE 1 may determine a duration 1720 related to the COT based on the information included in the information 1710 related to the COT (e.g., a starting point of the shared COT, an ending point of the shared COT, or a CAPC value related to the COT generation of UE 2). For example, based on a representative CAPC value of the MAC PDU generated by UE 1 being less than or equal to the CAPC value related to the COT (e.g., a CAPC value related to the LBT that UE 2 performed for the COT generation), UE 1 may receive the information 1710 related to the COT that UE 2 transmits (or shares). Meanwhile, for example, UE 1 may receive information 1730 from UE 2 within the COT duration 1720 to withdraw the COT (or to withdraw the sharing of the COT). For example, the information 1730 related to the withdrawal of the COT may be transferred included in control information or MAC CE or RRC message. Alternatively, for example, even when UE 1 does not receive separate information for the COT withdrawal from UE 2, when UE 1 receives a physical control channel or a physical shared channel from UE 2 within the COT duration 1720, UE 1 may regard the information 1730 related to the withdrawal of the COT as received. For example, the information 1730 related to the withdrawal of the COT may include information related to a priority of data to be transmitted in a remaining COT duration (e.g., a COT duration expected to be withdrawn) among the COT duration 1720 when UE 2 succeeds in withdrawing the shared COT from UE 1. Alternatively, for example, the information 1730 related to the withdrawal of the COT may include information related to a CAPC value related to an LBT (e.g., a type 2 LBT) to be performed in a remaining COT duration (e.g., a COT duration expected to be withdrawn) among the COT duration 1720 when UE 2 succeeds in withdrawing the shared COT from UE 1. Alternatively, for example, the information 1730 related to the withdrawal of the COT may include information related to a CAPC value related to a remaining COT duration (e.g., a COT duration expected to be withdrawn) among the COT duration 1720. For example, based on the reception of the information 1730 related to the withdrawal of the COT, UE 1 may perform the following priority comparison. For example, UE 1 may compare a representative CAPC value of an MAC PDU generated by UE 1 (or generated based on the enhanced LCP) with a CAPC value (and/or a CAPC value related to the remaining COT duration (e.g., a COT duration that is withdrawn when UE 2 succeeds in the COT withdrawal)) related to an LBT (e.g., a type 2 LBT) that UE 2 performs to transmit in the remaining COT duration (e.g., a COT duration that is withdrawn when UE 2 succeeds in the COT withdrawal). Alternatively, for example, UE 1 may compare a transmission priority of UE 1 determined based on a representative CAPC value of an MAC PDU generated by UE 1 (or generated based on the enhanced LCP) with a transmission priority of UE 2 in the remaining COT duration (e.g., a COT duration that is withdrawn when UE 2 succeeds in the COT withdrawal). Alternatively, for example, UE 1 may compare a priority of data that UE 1 intends to transmit and a priority of data that UE 2 intends to transmit in a remaining portion of the COT duration (e.g., a duration from a transmission/reception of information related to the COT withdrawal to the end of the COT). For example, when a representative CAPC value of an MAC PDU generated by UE 1 (or generated based on the enhanced LCP) is less than or equal to a CAPC value related to an LBT (e.g., a type 2 LBT) that UE 2 needs to perform to transmit within the withdrawn COT (or when a transmission priority of UE 1 is higher than a transmission priority of UE 2 within the remaining portion of the COT duration), UE 1 may continue to perform an unlicensed-band transmission operation based on type 2 LBT 1740 within the COT duration 1720. That is, for example, even when UE 1 receives information related to the withdrawal of the COT from UE 2, when a transmission priority of UE 1 within the COT is higher than a transmission priority of UE 2, UE 1 may ignore the information related to the withdrawal of the COT received from UE 2 and may continue to perform type 2 LBT 1740. That is, for example, even when UE 1 receives information related to the withdrawal of the COT from UE 2, when a transmission priority of UE 1 within the COT is higher than a transmission priority of UE 2, UE 1 may not respond to COT withdrawal request of UE 2 (i.e., may not return the shared COT to UE 2) and may continue to perform type 2 LBT 1740. In this case (i.e., when UE 2 fails to withdraw the COT), for example, UE 2 may not perform type 2 LBT until the remaining portion of the COT duration ends. For example, UE 2 may perform an unlicensed-band transmission operation based on type 1 LBT until the COT duration ends.

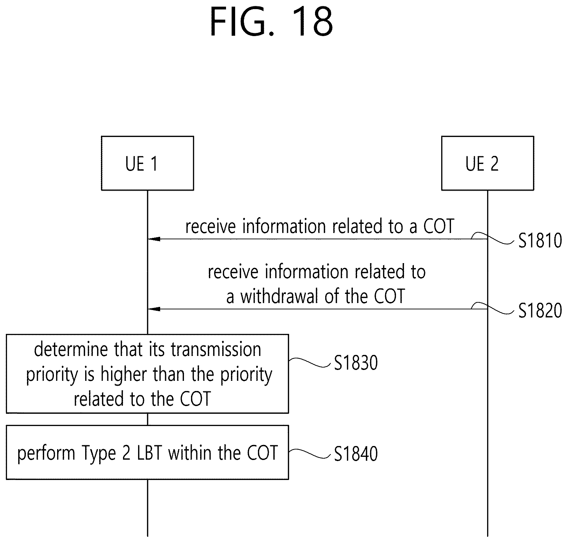

FIG. 18 shows an unlicensed-band operation of a COT responding UE that receives a COT withdrawal signal after receiving a shared COT from a COT initiating UE, based on an embodiment of the present disclosure. The embodiment of FIG. 18 may be combined with various embodiments of the present disclosure.

Referring to FIG. 18, UE 1 and UE 2 may be UEs that perform communication in an unlicensed band. For example, UE 1 may be a COT responding UE that receives a shared COT and performs a type 2 LBT-based transmission operation to a UE that shared the COT within the COT duration. For example, UE 2 may be a COT initiating UE that generates a COT based on type 1 LBT and shares the COT with a counterpart UE, and then performs reception from the counterpart UE within the COT duration. In step S1810, UE 1 may receive information related to the COT from UE 2. For example, UE 1 may generate/select a resource within a duration related to the COT determined based on the information related to the COT. Alternatively, for example, before receiving the information related to the COT, UE 1 may determine whether a resource generated in advance is within the duration related to the COT. In step S1820, UE 1 may receive information related to the withdrawal of the shared COT from UE 2, as described above in step S1810. For example, information related to the withdrawal of the COT may be transmitted included in control information (e.g., SCI or MAC CE or RRC message). Alternatively, for example, even when UE 1 does not receive explicit information related to the withdrawal of the COT, when UE 1 receives control information (e.g., a PSCCH) or data (e.g., a PSSCH) from UE 2 within the shared COT duration, UE 1 may regard the information related to the withdrawal of the COT as received from UE 2. Additionally, for example, information related to the withdrawal of the COT may include, as in the embodiment of FIG. 17 described above, information related to a CAPC value related to an LBT to be performed for transmission within the withdrawn COT duration when UE 2 succeeds in withdrawing the COT, or information related to a priority related to data of UE 2 to be transmitted within the withdrawn COT duration when UE 2 succeeds in withdrawing the COT. In step S1830, UE 1 may compare a priority (or a representative CAPC value) related to data that UE 1 intends to transmit with a priority (or a CAPC value) related to the COT whose withdrawal is requested by UE 2 in step S1820 described above. For example, UE 1 may determine that a priority related to data that UE 1 intends to transmit is higher than a priority related to data that UE 2 intends to transmit within the withdrawn COT duration when UE 2 succeeds in the withdrawal of the COT. Alternatively, for example, UE 1 may determine that a CAPC value related to data that UE 1 intends to transmit is less than a CAPC value related to an LBT that UE 2 needs to perform for transmission within the withdrawn COT duration when UE 2 succeeds in the withdrawal of the COT. In step S1840, UE 1 may perform type 2 LBT within the COT duration based on the determination in step S1830 described above (i.e., the determination that a priority related to UE 1 is higher than a priority related to UE 2). That is, for example, despite the COT withdrawal request of UE 2 in step S1820 described above, UE 1 may perform an unlicensed-band communication operation based on type 2 LBT without returning the COT. In this case, for example, UE 2 may not perform an unlicensed-band communication operation based on type 2 LBT until the COT duration ends, and may perform an unlicensed-band communication operation based on type 1 LBT.

Meanwhile, when the COT responding UE detects that the COT initiating UE has withdrawn the shared COT, the COT responding UE may return from enhanced LCP to legacy LCP within the remaining shared COT duration and may perform a type 1 LBT-based channel access procedure. Additionally, for example, the generated sidelink grant may be discarded or may continue to be used for a type 1 LBT-based MAC PDU transmission. And, for example, when the COT responding UE receives SL data of the COT initiating UE within the shared COT duration, the COT responding UE may determine that the COT initiating UE has withdrawn the shared COT. Alternatively, for example, the COT initiating UE may transfer a message related to the COT withdrawal (e.g., SCI) to the COT responding UE.

For example, RAN2 may discuss whether there may be a RAN2 impact related to the RAN1 working assumption for the COT withdrawal.

(Proposal 1) For example, when the COT responding UE detects that the COT initiating UE has withdrawn the shared COT, the COT responding UE may return from enhanced LCP to legacy LCP within the remaining shared COT duration and may perform a type 1 LBT-based channel access procedure.

(Proposal 2) For example, when the COT responding UE detects that the COT initiating UE has withdrawn the shared COT, if the COT responding UE has a generated sidelink grant, the generated sidelink grant may continue to be used for a type 1 LBT-based MAC PDU transmission.

For example, when the COT responding UE detects the COT withdrawal by receiving a COT withdrawal message from the COT initiating UE or by receiving SL data (or SCI, or PSCCH, or PSCCH and PSSCH) from the COT initiating UE within the shared COT duration, if the COT responding UE has not generated a sidelink grant for the sidelink data transmission, the COT responding UE may return from the enhanced LCP procedure to the legacy LCP procedure (e.g., a UE operation of generating a MAC PDU by selecting logical channel data of the highest priority of logical channels or a destination).

For example, when the COT responding UE detects the COT withdrawal by receiving a COT withdrawal message from the COT initiating UE or by receiving SL data (or SCI, or PSCCH, or PSCCH and PSSCH) from the COT initiating UE within the shared COT duration, if the COT responding UE has generated a sidelink grant for the sidelink data transmission, the COT responding UE may transmit the generated SL TB (or MAC PDU) based on the enhanced LCP by using a type 1 LBT-based channel access procedure ("first operation"). Alternatively, for example, if the COT responding UE has generated a sidelink grant for the sidelink data transmission, the COT responding UE may drop the generated SL TB (or MAC PDU) based on the enhanced LCP and may newly generate an SL TB (or MAC PDU) based on the legacy LCP procedure, and may transmit it by using a type 1 LBT-based channel access procedure ("second operation").

For example, the "first operation" and the "second operation" described above may be performed when the following condition is satisfied.
- A condition under which the UE (e.g., the COT responding UE) performs the "first operation" described above: when a retransmission resource is covered by the withdrawn shared COT, the first option is applied
- A condition under which the UE (e.g., the COT responding UE) performs the "second operation" described above: when an initial transmission resource is covered by the withdrawn COT

For example, an enhanced LCP procedure of the UE may be as follows. For example, the UE may perform the following enhanced LCP operation. For example, when the UE receives a shared COT from a counterpart UE (or the base station), the UE may filter only logical channel data whose destination layer-2 ID (or destination layer-1 ID) is the same as the source layer-2 ID (or source layer-1 ID) of the UE that shared the COT, among its own logical channel data, and may generate a MAC PDU. Alternatively, for example, when the UE that receives shared COT from the counterpart UE (or the base station) receives a shared COT from the counterpart UE (or the base station), the UE may filter only logical channel data whose representative CAPC value is less than or equal to the CAPC value indicated in the shared COT (and/or the COT withdrawal), and may generate a MAC PDU. Alternatively, for example, when the UE that receives a shared COT from a counterpart UE (or the base station), has transmission resources directly generated by itself (or transmission resources allocated from the base station), the UE may perform type 2 LBT by using the shared COT (and/or the withdrawn COT) only when the transmission resources exist within the COT duration of the shared COT (and/or the withdrawn COT).

For example, the UE of the present disclosure may perform the following operation.

For example, when a shared COT in which two sidelink grants belong is withdrawn, and when a TB related to the first grant is formed and a TB related to the second grant is not generated within the withdrawn shared COT, the COT responding UE may generate the TB related to the second grant through a legacy LCP operation, or may generate a TB that satisfies a CAPC relation related to the first TB through an enhanced LCP operation.

For example, when a shared COT in which two sidelink grants belong is withdrawn, and when a TB related to the first grant is not formed and a TB related to the second grant is not generated within the withdrawn shared COT, the COT responding UE may generate the TB related to the first grant through a legacy LCP operation, or may generate a TB that satisfies a CAPC relation related to the second TB through a preconfigured enhanced LCP operation.

For example, when a shared COT in which two sidelink grants belong is withdrawn, and when a TB related to the first grant is generated and a TB related to the second grant is generated within the withdrawn shared COT, the COT responding UE may determine whether to transmit the TBs or whether to (re)select resources according to an Intra-UE LBT blocking rule (or an Inter-UE LBT blocking rule).

For example, an Intra-UE LBT blocking rule may be as follows.
- The UE may avoid selecting N consecutive resources before a resource reserved for an SL TB with a higher logical channel priority.
- The UE may avoid selecting M consecutive resources after the reserved resource when the reserved resource overlaps with the LBT of a selected resource.

For example, an Inter-UE LBT blocking rule may be as follows.
- When a transmission symbol of a selected resource overlaps with a type 1 LBT of a reserved resource, the UE may avoid selecting N consecutive resources before the reserved resource with a higher priority.
- When a transmission symbol of the reserved resource overlaps with the LBT of a selected resource, the UE may avoid selecting N consecutive resources after the reserved resource.

For example, when a shared COT in which two sidelink grants belong is withdrawn, and when a TB related to the first grant is not generated and a TB related to the second grant is not generated within the withdrawn shared COT, the COT responding UE may generate the TBs related to the first and the second grants through a legacy LCP operation, or may generate the TBs related to the first and the second grants that satisfy a CAPC relation through a preconfigured enhanced LCP operation.

Meanwhile, for example, even when a COT obtained by a UE performing a sidelink (SL) discontinuous reception (DRX) operation (e.g., the COT initiating UE) (e.g., a COT to be shared with the COT responding UE, that is, when the COT responding UE receives the shared COT from the COT initiating UE, the COT responding UE may perform a type 2 LBT-based channel access operation within the COT duration) corresponds to an SL DRX inactive duration (e.g., a duration in which the transmitting UE does not perform PSCCH/PSSCH monitoring for data reception), it may be regarded as SL DRX active time, and an SL DRX active time operation (e.g., PSCCH/PSSCH monitoring for receiving data transmitted by the COT responding UE) may be performed.

For example, when the COT initiating UE indicates the COT withdrawal to the COT responding UE (e.g., through explicit COT-withdrawal signaling, or through implicit indication by receiving PSCCH/PSSCH), the COT initiating UE may maintain a DRX awake state (e.g., a state of monitoring PSCCH/PSSCH related to data transmitted by the counterpart UE) or a DRX inactive time state (e.g., a state of not monitoring PSCCH/PSSCH related to data transmitted by the counterpart UE) "during the withdrawn COT duration", or may return to a DRX active time operation based on a previously configured sidelink DRX configuration (e.g., an SL DRX onduration timer, an SL DRX inactivity timer, an SL DRX retransmission timer) "during the withdrawn COT duration".

For example, when the COT initiating UE indicates the COT withdrawal to the COT responding UE (e.g., through explicit COT-withdrawal signaling or through implicit indication by receiving PSCCH/PSSCH), the COT initiating UE may maintain a DRX awake state (e.g., a state of monitoring PSCCH/PSSCH related to data transmitted by the counterpart UE) or a DRX inactive time state (e.g., a state of not monitoring PSCCH/PSSCH related to data transmitted by the counterpart UE) during the shared COT duration (e.g., the COT shared with the COT responding UE), or may fall back to a DRX active time operation based on a previously configured sidelink DRX configuration (e.g., an SL DRX onduration timer, an SL DRX inactivity timer, an SL DRX retransmission timer) during the shared COT duration.

For example, the SL DRX configuration mentioned in the present disclosure may include at least one parameter/information among the parameters/information described below.
(1) SL drx-onDurationTimer: the duration at the beginning of a SL DRX cycle
(2) SL drx-SlotOffset: the delay before starting the SL drx-onDurationTimer
(3) SL drx-Inactivity Timer: the duration after the PSCCH occasion in which a PSCCH indicates a new SL transmission for the MAC entity
(4) (per HARQ process or per sidelink process) SL drx-RetransmissionTimer: the maximum duration until a retransmission is received
(5) (per HARQ process or per sidelink process) SL drx-HARQ-RTT-Timer: the minimum duration before PSCCH (sidelink control information) and PSSCH for SL HARQ retransmission is expected by the MAC entity
(6) SL drx-LongCycleStartOffset: the Long DRX cycle and drx-StartOffset which defines the subframe where the Long and Short DRX cycle starts
(7) SL drx-ShortCycle (optional): the Short DRX cycle
(8) SL drx-ShortCycleTimer (optional): the duration the UE shall follow the Short DRX cycle
(9) (per sidelink process) SL drx-HARQ-RTT-Timer: the minimum duration before an assignment for HARQ retransmission is expected by the MAC entity
(10) SL drx-StartOffset: the subframe where the SL DRX cycle starts
(11) SL drx-Cycle: the SL DRX cycle

Additionally, the following SL DRX timers mentioned in the present disclosure may be used for the following purposes.
(1) SL DRX onduration timer: a duration in which a UE performing an SL DRX operation shall basically operate in active time for receiving PSCCH/PSSCH of the counterpart UE
(2) SL DRX inactivity timer: a duration for extending the SL DRX onduration duration, which is a duration in which a UE performing an SL DRX operation shall basically operate in active time for receiving PSCCH/PSSCH of the counterpart UE

For example, the UE may extend the SL DRX onduration timer by the SL DRX inactivity timer duration. Also, when the UE receives a new packet (e.g., a new PSSCH transmission) from the counterpart UE, the UE may start the SL DRX inactivity timer and may extend the SL DRX onduration timer.

For example, the SL DRX inactivity timer may be used for extending the SL DRX onduration timer duration, which is a duration in which an RX UE performing an SL DRX operation shall basically operate in active time for receiving PSCCH/PSSCH of the counterpart TX UE. That is, the SL DRX onduration timer may be extended by the SL DRX inactivity timer duration. Also, when the RX UE receives a new packet (e.g., a new PSSCH transmission) from the counterpart TX UE, the RX UE may start the SL DRX inactivity timer and may extend the SL DRX onduration timer.

### (3) SL DRX HARQ RTT timer: a duration in which a UE performing an SL DRX operation operates in sleep mode until receiving a retransmission packet (or PSSCH assignment) transmitted by the counterpart UE

For example, when the UE starts the SL DRX HARQ RTT timer, the UE may determine that the counterpart UE will not transmit a sidelink retransmission packet to the UE until the SL DRX HARQ RTT timer expires, and may operate in sleep mode while the timer is running. For example, when the UE starts the SL DRX HARQ RTT timer, the UE may not monitor a sidelink retransmission packet from the counterpart UE until the SL DRX HARQ RTT timer expires. For example, when the RX UE receiving PSCCH/PSSCH transmitted by the TX UE transmits SL HARQ NACK feedback, the RX UE may start the SL DRX HARQ RTT timer. In this case, the RX UE may determine that the counterpart TX UE will not transmit a sidelink retransmission packet to the RX UE until the SL DRX HARQ RTT timer expires, and the RX UE may operate in sleep mode while the timer is running.

### (4) SL DRX retransmission timer: a timer that starts when the SL DRX HARQ RTT timer expires, and a duration in which a UE performing an SL DRX operation operates in active time to receive a retransmission packet (or a PSSCH assignment) transmitted by the counterpart UE

For example, during the timer duration, the UE may receive or monitor a retransmission sidelink packet (or a PSSCH assignment) transmitted by the counterpart UE. For example, the RX UE may receive or monitor a retransmission sidelink packet (or a PSSCH assignment) transmitted by the counterpart TX UE while the SL DRX retransmission timer is running.

The names of the timers described in the present disclosure (e.g., Uu DRX HARQ RTT TimerSL, Uu DRX Retransmission TimerSL, Sidelink DRX Onduration Timer, Sidelink DRX Inactivity Timer, Sidelink DRX HARQ RTT Timer, Sidelink DRX Retransmission Timer, drx-HARQ-RTT-Timer-SL, or drx-RetransmissionTimer-SL) are exemplary, and a timer that performs the same/similar function based on the description of each timer may be regarded as the same/ similar timer regardless of its name.

The COT withdrawal operation of the COT initiating UE described in the present disclosure may be interpreted as an operation in which the COT initiating UE transmits an explicit message to the COT responding UE and withdraws the shared COT. Alternatively, for example, the COT withdrawal operation of the COT initiating UE described in the present disclosure may be interpreted as an operation in which the COT initiating UE transmits PSCCH/PSSCH (e.g., SCI and/or sidelink data) to the COT responding UE within the shared COT duration and withdraws the shared COT.

The COT withdrawal duration described in the present disclosure may be interpreted as a duration in which the UE shall perform type 1 LBT.

The "channel" specified in the present disclosure may be applied as being replaced with "carrier", a "resource block (RB) set of a specific carrier", or a "band".

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on the activation/deactivation of the Uu Bandwidth part. For example, whether or not the proposed rule of the present disclosure is applied and/or related parameter configuration value(s) may be configured (differently or independently) depending on whether the Sidelink Bandwidth part is activated or deactivated. For example, whether or not the proposed rule of the present disclosure is applied and/or related parameter configuration value(s) may be configured (differently or independently) for a sidelink logical channel/logical channel group (or Uu logical channel or Uu logical channel group). For example, whether or not the proposed rule of the present disclosure is applied and/or related parameter configuration value(s) may be configured (differently or independently) of the initial transmission resource selection. For example, whether or not the proposed rule of the present disclosure is applied and/or related parameter configuration value(s) may be configured (differently or independently) of the retransmission resource selection. For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, even when the COT responding UE receives information related to a withdrawal of a COT from the COT initiating UE, when a priority related to the COT responding UE is higher than a priority related to the COT initiating UE, the COT responding UE may not return the shared COT to the COT initiating UE. That is, for example, when a priority of a transmission performed by the COT responding UE is higher than a priority of a transmission performed by the COT initiating UE, the COT responding UE may ignore a COT withdrawal signal transmitted from the COT initiating UE, and the COT responding UE may perform a type 2 LBT-based transmission within the shared COT. In this case, for example, even when a COT withdrawal signal is transmitted and received between UEs, a UE that needs to use the COT more may use the COT (e.g., may perform a type 2 LBT within the COT), and therefore an efficiency of resource allocation or resource usage within the COT may increase. Additionally, for example, because a UE that transmits high-priority data may maintain the usage of the shared COT without separately generating a COT, a delay related to a transmission of the high priority data may be prevented, and a quality of a service related to the high priority data may be ensured.

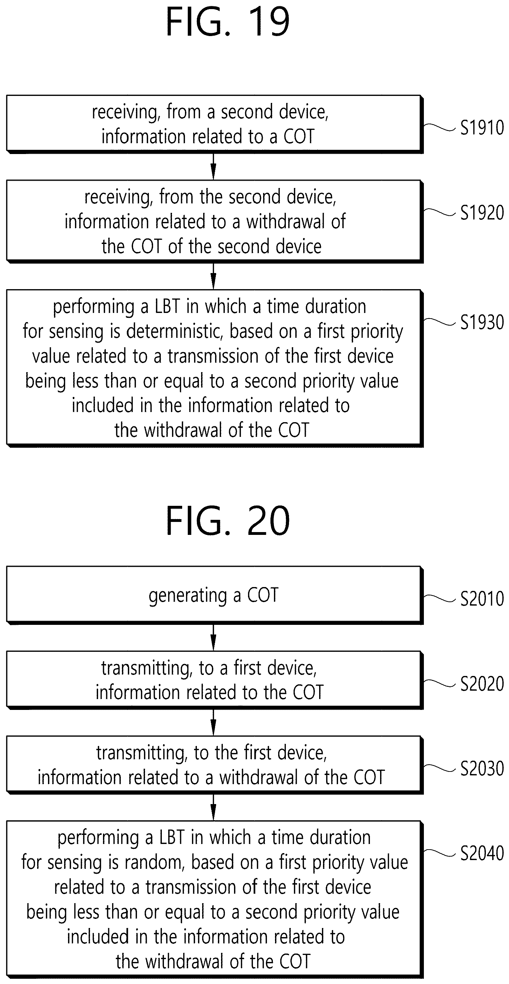

FIG. 19 shows a method for performing wireless communication by a first device, based on an embodiment of the present disclosure. The embodiment of FIG. 19 may be combined with various embodiments of the present disclosure.

Referring to FIG. 19, in step S1910, a first device may receive, from a second device, information related to a channel occupancy time (COT). In step S1920, the first device may receive, from the second device, information related to a withdrawal of the COT of the second device. In step S1930, the first device may perform a listen before talk (LBT) in which a time duration for sensing is deterministic, based on a first priority value related to a transmission of the first device being less than or equal to a second priority value included in the information related to the withdrawal of the COT.

For example, the time duration for the sensing related to the LBT may be deterministic as at least one of 25us, 16us, or 0.

For example, the LBT in which the time duration for sensing is deterministic may be performed within a duration related to the COT.

For example, the information related to the withdrawal of the COT may include information related to at least one of (i) a duration related to a COT expected to be withdrawn by the second device within a duration related to the COT, (ii) CAPC value related to a LBT to be performed by the second device within a duration related to a COT expected to be withdrawn by the second device, or (iii) a priority value related to data to be transmitted by the second device within a duration related to a COT expected to be withdrawn by the second device.

For example, the first priority value may be determined based on at least one of (i) a representative CAPC value related to the transmission of the first device, or (ii) a priority value related to data for the transmission of the first device. And, for example, the second priority value may be determined based on at least one of (i) a CAPC value related to a LBT to be performed by the second device within a duration related to a COT expected to be withdrawn by the second device, or (ii) a priority value related to data to be transmitted by the second device within a duration related to a COT expected to be withdrawn by the second device.

For example, a medium access control (MAC) protocol data unit (PDU) related to the transmission may be generated by a logical channel prioritization (LCP) being performed, based on data of at least one logical channel related to a CAPC value less than or equal to a CAPC value on which the second priority value is based among CAPC values configured for each of a plurality of logical channels.

For example, a MAC PDU related to the transmission may be generated by a LCP being performed, based on data of at least one logical channel related to a destination layer ID identical to a source layer ID related to the second device among destination layer IDs configured for each of a plurality of logical channels.

For example, the LBT in which the time duration for sensing is deterministic may be performed, based on a resource for the transmission being within a duration related to the COT.

For example, the transmission may be performed based on a channel being idle during the time duration for the sensing within a duration related to the COT.

For example, the information related to the withdrawal of the COT may be received based on control information including information related to a reserved resource of the second device. And, for example, based on the control information including the information related to the reserved resource of the second device being received before a resource selection of the first device for the transmission, at least one resource prior to the reserved resource within a duration related to the COT may be excluded from the resource selection. For example, the at least one resource may be N consecutive resources prior to the reserved resource within the duration related to the COT.

For example, based on at least one of a physical control channel or a physical shared channel transmitted from the second device being received within a duration related to the COT, a reception of the information related to the withdrawal of the COT of the first device may be determined.

For example, the information related to the withdrawal of the COT may be transmitted from the second device to the first device, based on at least one of a medium access control (MAC) control element (CE), or a radio resource control (RRC) message.

The proposed method may be applied to devices according to various embodiments of the present disclosure. First, a processor 102 of a first device 100 may control a transceiver 106 to receive, from a second device, information related to a channel occupancy time (COT). And, the processor 102 of the first device 100 may control the transceiver 106 to receive, from the second device, information related to a withdrawal of the COT of the second device. And, the processor 102 of the first device 100 may perform a listen before talk (LBT) in which a time duration for sensing is deterministic, based on a first priority value related to a transmission of the first device being less than or equal to a second priority value included in the information related to the withdrawal of the COT.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

According to one embodiment of the present disclosure, provided is a non-transitory computer-readable storage medium recording instructions. For example, the instructions, based on being executed, cause a first device to perform operations comprising: receiving, from a second device, information related to a channel occupancy time (COT); receiving, from the second device, information related to a withdrawal of the COT of the second device; and performing a listen before talk (LBT) in which a time duration for sensing is deterministic, based on a first priority value related to a transmission of the first device being less than or equal to a second priority value included in the information related to the withdrawal of the COT.

FIG. 20 shows a method for performing wireless communication by a second device, based on an embodiment of the present disclosure. The embodiment of FIG. 20 may be combined with various embodiments of the present disclosure.

Referring to FIG. 20, in step S2010, a second device may generate a channel occupancy time (COT). In step S2020, the second device may transmit, to a first device, information related to the COT. In step S2030, the second device may transmit, to the first device, information related to a withdrawal of the COT. In step S2040, the second device may perform a listen before talk (LBT) in which a time duration for sensing is random, based on a first priority value related to a transmission of the first device being less than or equal to a second priority value included in the information related to the withdrawal of the COT.

The proposed method may be applied to devices according to various embodiments of the present disclosure. First, a processor 202 of a second device 200 may generate a channel occupancy time (COT). And, the processor 202 of the second device 200 may control a transceiver 206 to transmit, to a first device, information related to the COT. And, the processor 202 of the second device 200 may control the transceiver 206 to transmit, to the first device, information related to a withdrawal of the COT. And, the processor 202 of the second device 200 may perform a listen before talk (LBT) in which a time duration for sensing is random, based on a first priority value related to a transmission of the first device being less than or equal to a second priority value included in the information related to the withdrawal of the COT.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: generating a channel occupancy time (COT); transmitting, to a first device, information related to the COT; transmitting, to the first device, information related to a withdrawal of the COT; and performing a listen before talk (LBT) in which a time duration for sensing is random, based on a first priority value related to a transmission of the first device being less than or equal to a second priority value included in the information related to the withdrawal of the COT.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: generating a channel occupancy time (COT); transmitting, to a first device, information related to the COT; transmitting, to the first device, information related to a withdrawal of the COT; and performing a listen before talk (LBT) in which a time duration for sensing is random, based on a first priority value related to a transmission of the first device being less than or equal to a second priority value included in the information related to the withdrawal of the COT.

According to one embodiment of the present disclosure, provided is a non-transitory computer-readable storage medium recording instructions. For example, the instructions, based on being executed, cause a second device to perform operations comprising: generating a channel occupancy time (COT); transmitting, to a first device, information related to the COT; transmitting, to the first device, information related to a withdrawal of the COT; and performing a listen before talk (LBT) in which a time duration for sensing is random, based on a first priority value related to a transmission of the first device being less than or equal to a second priority value included in the information related to the withdrawal of the COT.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

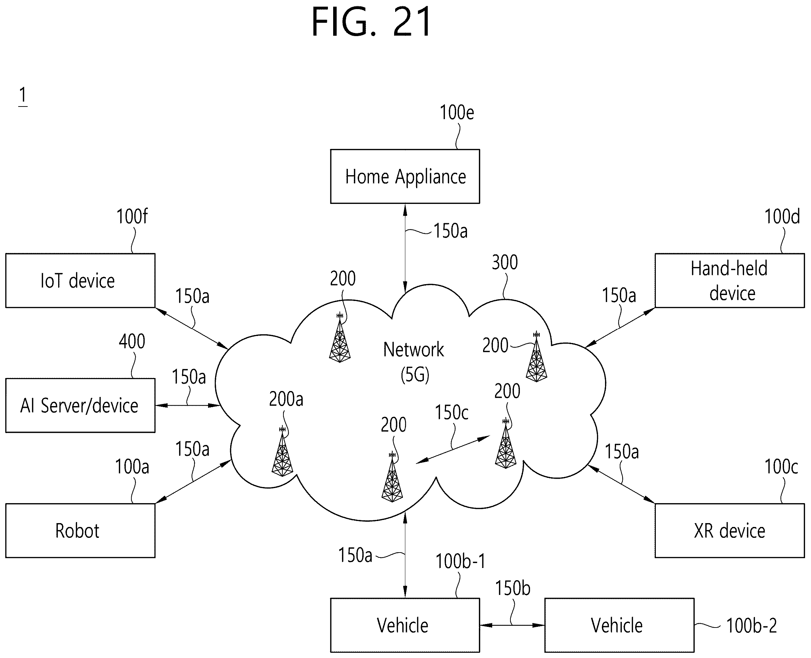

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB 1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

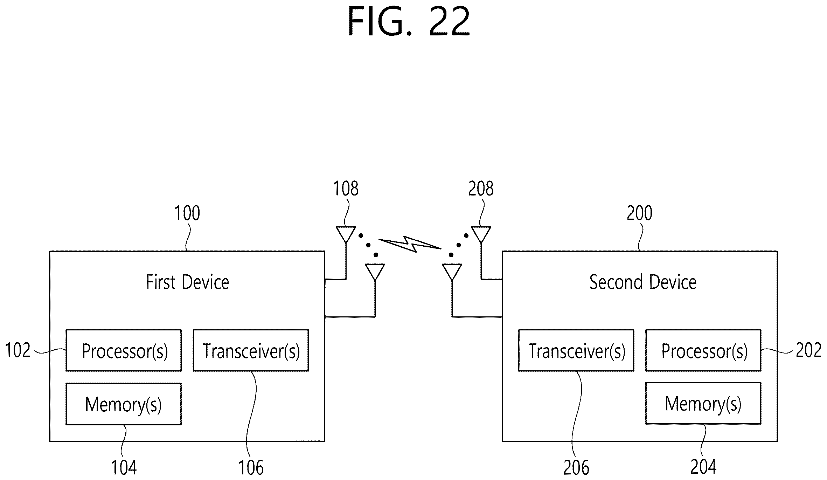

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

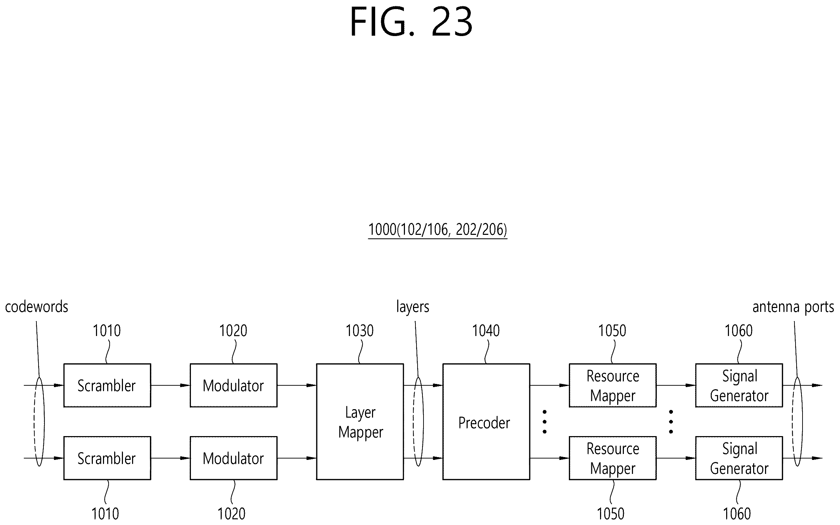

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

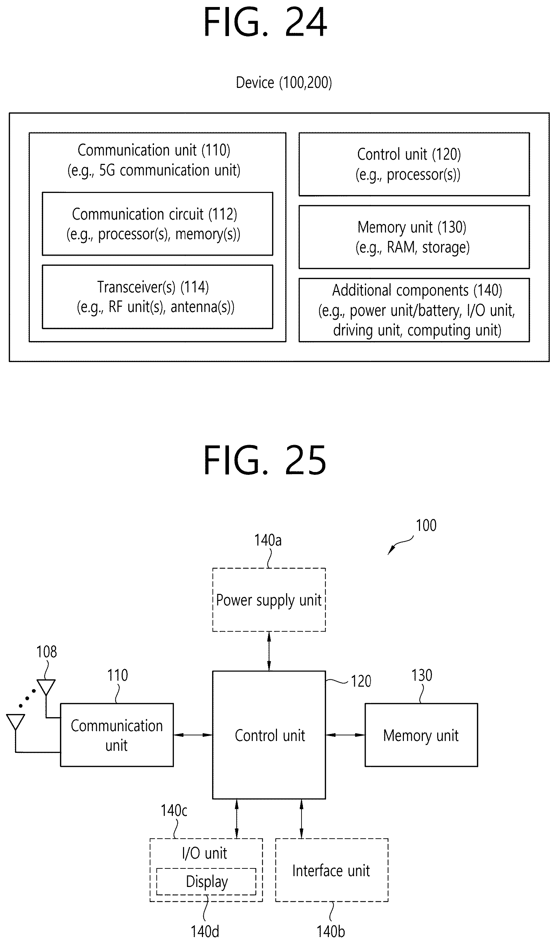

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

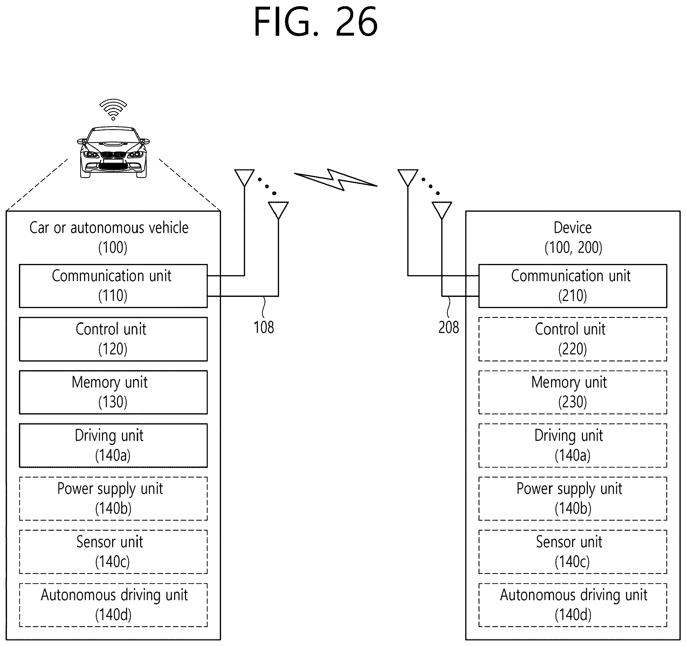

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
receiving, from a second device, information related to a channel occupancy time (COT);
receiving, from the second device, information related to a withdrawal of the COT of the second device; and
performing a listen before talk (LBT) in which a time duration for sensing is deterministic, based on a first priority value related to a transmission of the first device being less than or equal to a second priority value included in the information related to the withdrawal of the COT.

2. The method of claim 1, wherein the time duration for the sensing related to the LBT is deterministic as at least one of 25us, 16us, or 0.

3. The method of claim 1, wherein the LBT in which the time duration for sensing is deterministic is performed within a duration related to the COT.

4. The method of claim 1, wherein the information related to the withdrawal of the COT includes information related to at least one of (i) a duration related to a COT expected to be withdrawn by the second device within a duration related to the COT, (ii) CAPC value related to a LBT to be performed by the second device within a duration related to a COT expected to be withdrawn by the second device, or (iii) a priority value related to data to be transmitted by the second device within a duration related to a COT expected to be withdrawn by the second device.

5. The method of claim 1, wherein the first priority value is determined based on at least one of (i) a representative CAPC value related to the transmission of the first device, or (ii) a priority value related to data for the transmission of the first device, and
wherein the second priority value is determined based on at least one of (i) a CAPC value related to a LBT to be performed by the second device within a duration related to a COT expected to be withdrawn by the second device, or (ii) a priority value related to data to be transmitted by the second device within a duration related to a COT expected to be withdrawn by the second device.

6. The method of claim 1, wherein a medium access control (MAC) protocol data unit (PDU) related to the transmission is generated by a logical channel prioritization (LCP) being performed, based on data of at least one logical channel related to a CAPC value less than or equal to a CAPC value on which the second priority value is based among CAPC values configured for each of a plurality of logical channels.

7. The method of claim 1, wherein a MAC PDU related to the transmission is generated by a LCP being performed, based on data of at least one logical channel related to a destination layer ID identical to a source layer ID related to the second device among destination layer IDs configured for each of a plurality of logical channels.

8. The method of claim 1, wherein the LBT in which the time duration for sensing is deterministic is performed, based on a resource for the transmission being within a duration related to the COT.

9. The method of claim 1, wherein the transmission is performed based on a channel being idle during the time duration for the sensing within a duration related to the COT.

10. The method of claim 1, wherein the information related to the withdrawal of the COT is received based on control information including information related to a reserved resource of the second device, and
wherein, based on the control information including the information related to the reserved resource of the second device being received before a resource selection of the first device for the transmission, at least one resource prior to the reserved resource within a duration related to the COT is excluded from the resource selection.

11. The method of claim 10, wherein the at least one resource is N consecutive resources prior to the reserved resource within the duration related to the COT.

12. The method of claim 1, wherein, based on at least one of a physical control channel or a physical shared channel transmitted from the second device being received within a duration related to the COT, a reception of the information related to the withdrawal of the COT of the first device is determined.

13. The method of claim 1, wherein the information related to the withdrawal of the COT is transmitted from the second device to the first device, based on at least one of a medium access control (MAC) control element (CE), or a radio resource control (RRC) message.

14. A first device adapted to perform wireless communication, the first device comprising:
at least one transceiver;
at least one processor; and
at least one memory connected to the at least one processor and storing instructions that, based on being executed, cause the first device to perform operations comprising:
receiving, from a second device, information related to a channel occupancy time (COT);
receiving, from the second device, information related to a withdrawal of the COT of the second device; and
performing a listen before talk (LBT) in which a time duration for sensing is deterministic, based on a first priority value related to a transmission of the first device being less than or equal to a second priority value included in the information related to the withdrawal of the COT.

15. A processing device adapted to control a first device to perform wireless communication, the processing device comprising:
at least one processor; and
at least one memory connected to the at least one processor and storing instructions that, based on being executed, cause the at least one processor to perform operations comprising:
receiving, from a second device, information related to a channel occupancy time (COT);
receiving, from the second device, information related to a withdrawal of the COT of the second device; and
performing a listen before talk (LBT) in which a time duration for sensing is deterministic, based on a first priority value related to a transmission of the first device being less than or equal to a second priority value included in the information related to the withdrawal of the COT.

16. A non-transitory computer-readable storage medium recording instructions, the instruction, when executed, cause a first device to perform operations comprising:
receiving, from a second device, information related to a channel occupancy time (COT);
receiving, from the second device, information related to a withdrawal of the COT of the second device; and
performing a listen before talk (LBT) in which a time duration for sensing is deterministic, based on a first priority value related to a transmission of the first device being less than or equal to a second priority value included in the information related to the withdrawal of the COT.

17. A method for performing wireless communication by a second device, the method comprising:
generating a channel occupancy time (COT);
transmitting, to a first device, information related to the COT;
transmitting, to the first device, information related to a withdrawal of the COT; and
performing a listen before talk (LBT) in which a time duration for sensing is random, based on a first priority value related to a transmission of the first device being less than or equal to a second priority value included in the information related to the withdrawal of the COT.

18. A second device adapted to perform wireless communication, the second device comprising:
at least one transceiver;
at least one processor; and
at least one memory connected to the at least one processor and storing instructions that, based on being executed, cause the second device to perform operations comprising:
generating a channel occupancy time (COT);
transmitting, to a first device, information related to the COT;
transmitting, to the first device, information related to a withdrawal of the COT; and
performing a listen before talk (LBT) in which a time duration for sensing is random, based on a first priority value related to a transmission of the first device being less than or equal to a second priority value included in the information related to the withdrawal of the COT.

19. A processing device adapted to control a second device to perform wireless communication, the processing device comprising:
at least one processor; and
at least one memory connected to the at least one processor and storing instructions that, based on being executed, cause the at least one processor to perform operations comprising:
generating a channel occupancy time (COT);
transmitting, to a first device, information related to the COT;
transmitting, to the first device, information related to a withdrawal of the COT; and
performing a listen before talk (LBT) in which a time duration for sensing is random, based on a first priority value related to a transmission of the first device being less than or equal to a second priority value included in the information related to the withdrawal of the COT.

20. A non-transitory computer-readable storage medium recording instructions, the instruction, when executed, cause a second device to perform operations comprising:
generating a channel occupancy time (COT);
transmitting, to a first device, information related to the COT;
transmitting, to the first device, information related to a withdrawal of the COT; and
performing a listen before talk (LBT) in which a time duration for sensing is random, based on a first priority value related to a transmission of the first device being less than or equal to a second priority value included in the information related to the withdrawal of the COT.
